(19) **Europäisches Patentamt / European Patent Office / Office européen des brevets**

(11) **EP 4 261 675 A1**

(12) ## EUROPEAN PATENT APPLICATION
published in accordance with Art. 153(4) EPC

(43) Date of publication:
**18.10.2023 Bulletin 2023/42**

(21) Application number: **22748903.6**

(22) Date of filing: **22.01.2022**

(51) International Patent Classification (IPC):
**G06F 3/147** *(2006.01)* **G09G 5/02** *(2006.01)*

(52) Cooperative Patent Classification (CPC):
**G06F 3/147; G09G 3/20; G09G 3/3208; G09G 5/02**

(86) International application number:
**PCT/CN2022/073339**

(87) International publication number:
**WO 2022/166624 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.02.2021 CN 202110144623**
**02.02.2021 CN 202110143801**
**30.06.2021 CN 202110742740**

(71) Applicant: **Huawei Technologies Co., Ltd.**
**Shenzhen, Guangdong 518129 (CN)**

(72) Inventors:
• **CHEN, Jian**
**Shenzhen, Guangdong 518129 (CN)**
• **ZHANG, Peng**
**Shenzhen, Guangdong 518129 (CN)**
• **ZHOU, Yuehai**
**Shenzhen, Guangdong 518129 (CN)**
• **LI, Yu**
**Shenzhen, Guangdong 518129 (CN)**
• **WANG, Liang**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **SCREEN DISPLAY METHOD AND RELATED APPARATUS**

(57) A screen display method is provided. The method includes: After obtaining bitmap data of to-be-displayed content and before sending the bitmap data of the to-be-displayed content to a display screen, an electronic device performs software filtering processing on the bitmap data; and then performs, by using a sub-pixel rendering algorithm, sub-pixel rendering on bitmap data obtained through the software filtering, and further drives, based on an RGB grayscale value determined through the sub-pixel rendering, an OLED light-emitting point on a display panel of the display screen to display the to-be-displayed content. A filtering parameter of the software filtering is determined based on the sub-pixel rendering algorithm. The software filtering and the sub-pixel rendering algorithm work together, so that a display edge of the to-be-displayed content on the OLED display panel can be optimized, thereby changing display effect. In this way, a problem that the sub-pixel rendering algorithm cannot be updated online is resolved.

Step S101: An electronic device 100 determines a vector map of to-be-displayed content

Step S102: The electronic device 100 renders the vector map of the to-be-displayed content, to generate a bitmap of the to-be-displayed content

Step S103: The electronic device 100 performs software filtering on the bitmap of the to-be-displayed content

Step S104: The electronic device 100 performs hybrid superimposition and layer superimposition on a bitmap that is of the to-be-displayed content and that is obtained through the software filtering

Step S105: The electronic device 100 lights up, based on the superimposed bitmap, a light emitting point on a display screen by using a sub-pixel rendering algorithm, and displays the to-be-displayed content

FIG. 9

**Description**

This application claims priorities to Chinese Patent Application No. 202110144623.6, filed with the China National Intellectual Property Administration on February 02, 2021 and entitled "APPARATUS AND METHOD FOR IMPROVING SCREEN DISPLAY EFFECT", to Chinese Patent Application No. 202110143801.3, filed with the China National Intellectual Property Administration on February 02, 2021 and entitled "APPARATUS AND METHOD FOR JOINTLY ADJUSTING SUB-PIXEL RENDERING BY SOFTWARE AND HARDWARE", and to Chinese Patent Application No. 202110742740.2, filed with the China National Intellectual Property Administration on June 30, 2021 and entitled "SCREEN DISPLAY METHOD AND RELATED APPARATUS", which are incorporated herein by reference in their entireties.

**TECHNICAL FIELD**

This application relates to the field of electronic technologies, and in particular, to a screen display method and a related apparatus.

**BACKGROUND**

A sub-pixel rendering (sub-pixel rendering, SPR) technology is often used in an electronic device having an organic light-emitting diode (organic light-emitting diode, OLED) display screen. The sub-pixel rendering technology utilizes a difference of human eyes' recognition of different colors to change a mode in which a pixel is conventionally defined by a red sub-pixel, a green sub-pixel, and a blue sub-pixel, and simulates a same pixel resolution performance capability by sharing some color sub-pixels between different pixels with a small quantity of sub-pixels, thereby simplifying a manufacturing process and reducing manufacturing costs.

The sub-pixel rendering technology has the following two key elements: a sub-pixel arrangement and a sub-pixel rendering algorithm. The sub-pixel arrangement is determined by an OLED display panel, and defines a distribution rule of sub-pixels of different colors on the display panel. The sub-pixel rendering algorithm is determined by a display screen controller and defines how a display device lights up sub-pixels of different colors based on input data. The sub-pixel arrangement and the sub-pixel rendering algorithm jointly affect display effect of the display device. A proper combination makes a display picture clear, delicate, soft, and accurate in color. An improper combination may cause a sense of pixelation, a color cast, a color edge, and the like in the picture.

Therefore, the sub-pixel arrangement depends on a display panel device, and the sub-pixel rendering algorithm is often integrated into the display screen controller. Both the sub-pixel arrangement and the sub-pixel rendering algorithm are determined by hardware, and have characteristics of a long update time period, poor customization, and inability to update by software. After an electronic device equipped with a display screen is selected, manufactured, produced, and sold, a sub-pixel arrangement and a sub-pixel rendering algorithm of the display screen cannot be changed in a software update manner, and display effect is difficult to be optimized. How to optimize the display effect of the display screen is a problem being studied by a person skilled in the art.

**SUMMARY**

Embodiments of this application provide a screen display method and a related apparatus, to improve screen display effect.

According to a first aspect, this application provides a screen display method, applied to an electronic device, where the electronic device includes an OLED display panel and a display screen controller integrating a sub-pixel rendering algorithm. The method includes: The electronic device obtains bitmap data of to-be-displayed content. The electronic device performs software filtering on the bitmap data, where the software filtering is determined based on the sub-pixel rendering algorithm and is used to optimize a display edge of the to-be-displayed content on the OLED display panel. The display screen controller performs sub-pixel rendering on bitmap data obtained through the software filtering, and determines an RGB grayscale value of each pixel. The display screen controller drives, based on the RGB grayscale value, an OLED light-emitting point on the OLED display panel to display the to-be-displayed content.

In this embodiment of this application, the to-be-displayed content may include a text, a character, an image, and the like. The sub-pixel rendering algorithm is a hardware algorithm that is difficult to update by software. After obtaining the bitmap data of the to-be-displayed content, and before sending the bitmap data of the to-be-displayed content to a display screen, the electronic device performs software filtering processing on the bitmap data; and then performs, by using the sub-pixel rendering algorithm, the sub-pixel rendering on the bitmap data obtained through the software filtering, to determine the RGB grayscale value (including a red pixel grayscale value, a green pixel grayscale value, and a blue pixel grayscale value) of each pixel. A filtering parameter of the software filtering is determined based on the sub-pixel rendering algorithm. The software filtering and the sub-pixel rendering algorithm work together, so that a display edge of the to-be-displayed content on the OLED display panel can be optimized, thereby changing display effect. In this way, a problem that the sub-pixel rendering algorithm cannot be updated online is resolved.

With reference to the first aspect, in some possible implementations, that the electronic device performs software filtering on the bitmap data includes: The bitmap data includes RGB three-channel bitmap data and single-channel grayscale bitmap data. When the bitmap data is single-channel grayscale bitmap data, the bitmap data is converted into RGB three-channel bitmap data. The electronic device separately performs single-pixel channel software filtering processing on a red pixel grayscale value and a blue pixel grayscale value of the RGB three-channel bitmap data. The electronic device keeps a green pixel grayscale value of the bitmap data unchanged.

The bitmap data includes RGB three-channel bitmap data, that is, includes grayscale value data of R, G, and B channels of each pixel (a red pixel grayscale value, a blue pixel grayscale value, and a green pixel grayscale value of each pixel). The red pixel grayscale value of each pixel forms a red channel in the bitmap data, the blue pixel grayscale value of each pixel forms a blue channel in the bitmap data, and the green pixel grayscale value of each pixel forms a green channel in the bitmap data. The single-pixel channel software filtering processing refers to performing software filtering processing on one channel of the RGB three-channel bitmap data.

When the bitmap data is RGB three-channel bitmap data, the electronic device separately performs single-pixel channel software filtering processing on a red pixel grayscale value and a blue pixel grayscale value in the bitmap data, and determines a filtered red pixel grayscale value and a filtered blue pixel grayscale value. A green pixel grayscale value is kept unchanged.

The bitmap data also includes single-channel grayscale bitmap data, that is, includes grayscale value data of one channel of each pixel (that is, a red pixel grayscale value, a blue pixel grayscale value, and a green pixel grayscale value of each pixel are the same). When the bitmap data is single-channel grayscale bitmap data, the electronic device first converts the single-channel grayscale bitmap data into RGB three-channel bitmap data. That is, if a size of an original bitmap (the single-channel grayscale bitmap data) is [w, h], the electronic device allocates a memory whose size is [w, h, 3] to convert the single-channel grayscale bitmap data into RGB three-channel bitmap data. The electronic device separately performs single-pixel channel software filtering processing on a red pixel grayscale value and a blue pixel grayscale value in the RGB three-channel bitmap data, and determines a filtered red pixel grayscale value and a filtered blue pixel grayscale value. A green pixel grayscale value is kept unchanged.

With reference to the first aspect, in some possible implementations, the single-pixel channel software filtering processing includes: A direction of the single-pixel channel software filtering processing is perpendicular to a direction of one-dimensional filtering processing in the sub-pixel rendering algorithm. That is, a filtering parameter in the single-pixel channel software filtering processing is determined based on the sub-pixel rendering algorithm. When a filter in the sub-pixel rendering algorithm is a one-dimensional filter in a horizontal direction, the filtering parameter in the single-pixel channel software filtering processing is a one-dimensional filtering parameter in a vertical direction. When the filter in the sub-pixel rendering algorithm is a one-dimensional filter in a vertical direction, the filtering parameter in the single-pixel channel software filtering processing is a one-dimensional filtering parameter in a horizontal direction.

In some possible implementations, a formula of the one-dimensional filtering includes:

$$dst(x,y) = \sum_{\substack{0 \le x' < kernel.cols \\ 0 \le y' < kernel.rows}} kernel(x',y') \times src(x + x' - anchor.x, y + y' - anchor.y)$$

Here, dst (x, y) is a pixel grayscale value of an output pixel (x, y), and src (x, y) is a pixel grayscale value of an input pixel (x, y). Here, kernel is a convolution kernel. For example, if a filter core for one-dimensional filtering in a horizontal direction is (0.5, 0.5), a value of kernel is (0.5, 0.5). The filter core is a matrix of $1 \times 2$. In this case, a value of $x^{\wedge}$' is 0 and 1, that is, kernel.cols is 2, and a value of $y^{\wedge}$' is 0, that is, kernel.cols is 1. Here, anchor is an anchor point, anchor.x is a horizontal coordinate of the anchor point, and anchor.y is a vertical coordinate of the anchor point. For example, an anchor point of the one-dimensional filtering in a horizontal direction may be (0, 0). Each value in an output matrix is equal to a sum of a result obtained by multiplying an input matrix by a location element corresponding to the convolution kernel.

With reference to the first aspect, in some possible implementations, before the electronic device performs the software filtering on the bitmap data, the method further includes: The electronic device determines the sub-pixel rendering algorithm based on a model of a display screen. Models of different display screens may be different. The electronic device may determine, by using the model of the display screen, the sub-pixel rendering algorithm integrated into the display screen, so that the electronic device may determine, by using a filtering manner used in the sub-pixel rendering algorithm, the filtering parameter of the software filtering of the electronic device or the filtering parameter in the single-pixel channel software filtering processing.

With reference to the first aspect, in some possible implementations, that the electronic device performs software filtering on the bitmap data includes: The electronic device performs the software filtering on the bitmap data when it is determined that the electronic device is not in an image shooting sharing scenario or a screen projection scenario. That is, the electronic device needs to distinguish different scenarios to determine whether the software filtering needs to be performed on the bitmap data. When the electronic device receives an image shooting sharing operation or a screen projection operation, the electronic device captures an image, and sends the image to another electronic device by using an application. Image data sent by the electronic device to the another electronic device is a bitmap. If the electronic device performs a preset filtering operation on the captured image, the sent image data is a bitmap obtained through the software filtering. The another electronic device receives the bitmap obtained through the software filtering, and display effect of the image on the another electronic device is affected. Therefore, when the electronic device needs to determine that the electronic device is not in the image shooting sharing scenario or the screen projection scenario, the electronic device performs the software filtering on the bitmap data.

With reference to the first aspect, in some possible implementations, after the electronic device performs the software filtering on the bitmap data of the to-be-displayed content, the method further includes: The electronic device stores the bitmap data that is of the to-be-displayed content and that is obtained through the software filtering. Herein, the electronic device stores the bitmap of the displayed content for next invocation.

In some possible implementations, the method further includes: The electronic device invokes the stored bitmap data that is of the to-be-displayed content and that is obtained through the software filtering. The display screen controller performs the sub-pixel rendering on the bitmap data obtained through the software filtering, to determine the RGB grayscale value of each pixel, and drives, based on the RGB grayscale value, the OLED light-emitting point on the OLED display panel to display the to-be-displayed content. Because the electronic device stores the bitmap data that is of the to-be-displayed content and that is obtained through the software filtering, the electronic device may directly invoke the bitmap data obtained through the software filtering for the same to-be-displayed content next time, that is, the electronic device needs to perform only one rendering and software filtering operation on a newly appearing text, character, or image. After that, a software filtering result can be reused, to greatly reduce a calculation amount.

With reference to the first aspect, in some possible implementations, that the electronic device obtains bitmap data of to-be-displayed content includes: The electronic device determines a vector map of the to-be-displayed content. The electronic device rasterizes the vector map of the to-be-displayed content to obtain the bitmap data of the to-be-displayed content.

With reference to the first aspect, in some possible implementations, a data type of the to-be-displayed content includes a text, a character, and an image.

According to a second aspect, this application provides an electronic device, including one or more processors, one or more memories, a display screen, and a display screen controller integrating a sub-pixel rendering algorithm. The one or more memories are separately coupled to the one or more processors, the display screen, and the display screen controller. The one or more memories are configured to store computer program code, and the computer program code includes computer instructions. When the computer instructions are run on the processor, the electronic device is enabled to perform the following steps:

obtaining, by using the processor, bitmap data of to-be-displayed content;
performing, by using the processor, software filtering on the bitmap data, where the software filtering is determined based on the sub-pixel rendering algorithm and is used to optimize a display edge of the to-be-displayed content on an OLED display panel;
performing, by using the display screen controller, sub-pixel rendering on bitmap data obtained through the software filtering, to determine an RGB grayscale value of each pixel; and
driving, by using the display screen controller based on the RGB grayscale value, an OLED light-emitting point on the OLED display panel to display the to-be-displayed content.

In this embodiment of this application, the to-be-displayed content may include a text, a character, an image, and the like. The sub-pixel rendering algorithm is a hardware algorithm that is difficult to update by software. After obtaining the bitmap data of the to-be-displayed content, and before sending the bitmap data of the to-be-displayed content to a display screen, the electronic device performs software filtering processing on the bitmap data; and then performs, by using the sub-pixel rendering algorithm, the sub-pixel rendering on the bitmap data obtained through the software filtering. A filtering parameter of the software filtering is determined based on the sub-pixel rendering algorithm. The software filtering and the sub-pixel rendering algorithm work together, so that a display edge of the to-be-displayed content on the OLED display panel can be optimized, thereby changing display effect. In this way, a problem that the sub-pixel rendering algorithm cannot be updated online is resolved.

With reference to the second aspect, in some possible implementations, the performing, by using the processor, software filtering on the bitmap data includes: the bitmap data includes RGB three-channel bitmap data and single-channel grayscale bitmap data; when the bitmap data is single-channel grayscale bitmap data, converting, by using the processor, the bitmap data into RGB three-channel bitmap data; separately performing, by using the processor, single-pixel channel software filtering processing on a red pixel grayscale value and a blue pixel grayscale value of the RGB three-channel bitmap data; and keeping a green pixel grayscale value of the bitmap data unchanged.

With reference to the second aspect, in some possible implementations, the single-pixel channel software filtering processing includes: A direction of the single-pixel channel software filtering processing is perpendicular to a direction of one-dimensional filtering processing in the sub-pixel rendering algorithm. That is, a filtering parameter in the single-pixel channel software filtering processing is determined based on the sub-pixel rendering algorithm. When a filter in the sub-pixel rendering algorithm is a one-dimensional filter in a horizontal direction, the filtering parameter in the single-pixel channel software filtering processing is a one-dimensional filtering parameter in a vertical direction. When the filter in the sub-pixel rendering algorithm is a one-dimensional filter in a vertical direction, the filtering parameter in the single-pixel channel software filtering processing is a one-dimensional filtering parameter in a horizontal direction.

In some possible implementations, a formula of the one-dimensional filtering includes:

$$dst(x,y) = \sum_{\substack{0 \le x' < kernel.cols \\ 0 \le y' < kernel.rows}} kernel(x',y') \times src(x + x' - anchor.x, y + y' - anchor.y)$$

Here, dst (x, y) is a pixel grayscale value of an output pixel (x, y), and src (x, y) is a pixel grayscale value of an input pixel (x, y). Here, kernel is a convolution kernel. For example, if a filter core for one-dimensional filtering in a horizontal direction is (0.5, 0.5), a value of kernel is (0.5, 0.5). The filter core is a matrix of 1×2. In this case, a value of x^' is 0 and 1, that is, kernel.cols is 2, and a value of y^' is 0, that is, kernel.cols is 1. Here, anchor is an anchor point, anchor.x is a horizontal coordinate of the anchor point, and anchor.y is a vertical coordinate of the anchor point. For example, an anchor point of the one-dimensional filtering in a horizontal direction may be (0, 0). Each value in an output matrix is equal to a sum of a result obtained by multiplying an input matrix by a location element corresponding to the convolution kernel.

With reference to the second aspect, in some possible implementations, before the performing, by using the processor, software filtering on the bitmap data, the method further includes: determining, by using the processor, the sub-pixel rendering algorithm based on a model of the display screen. Models of different display screens may be different. The electronic device may determine, by using the model of the display screen, the sub-pixel rendering algorithm integrated into the display screen, so that the electronic device may determine, by using a filtering manner used in the sub-pixel rendering algorithm, the filtering parameter of the software filtering of the electronic device or the filtering parameter in the single-pixel channel software filtering processing.

With reference to the second aspect, in some possible implementations, the performing, by using the processor, software filtering on the bitmap data includes: performing, by using the processor, the software filtering on the bitmap data when it is determined that the electronic device is not in an image shooting sharing scenario or a screen projection scenario. That is, the electronic device needs to distinguish different scenarios to determine whether the software filtering needs to be performed on the bitmap data. When the electronic device receives an image shooting sharing operation or a screen projection operation, the electronic device captures an image, and sends the image to another electronic device by using an application. Image data sent by the electronic device to the another electronic device is a bitmap. If the electronic device performs a preset filtering operation on the captured image, the sent image data is a bitmap obtained through the software filtering. The another electronic device receives the bitmap obtained through the software filtering, and display effect of the image on the another electronic device is affected. Therefore, when the electronic device needs to determine that the electronic device is not in the image shooting sharing scenario or the screen projection scenario, the electronic device performs the software filtering on the bitmap data.

With reference to the second aspect, in some possible implementations, after the performing, by using the processor, software filtering on the bitmap data of the to-be-displayed content, the electronic device further performs the following step: storing, by using the memory, the bitmap data that is of the to-be-displayed content and that is obtained through the software filtering. Herein, the electronic device stores the bitmap of the displayed content for next invocation.

With reference to the second aspect, in some possible implementations, the electronic device further performs the following steps: invoking, by using the processor, the stored bitmap data that is of the to-be-displayed content and that is obtained through the software filtering; and performing, by using the display screen controller, the sub-pixel rendering on the bitmap data obtained through the software filtering, to determine the RGB grayscale value of each pixel, and driving, based on the RGB grayscale value, the OLED light-emitting point on the OLED display panel to display the to-be-displayed content. Because the electronic device stores the bitmap data that is of the to-be-displayed content and that is obtained through the software filtering, the electronic device may directly invoke the bitmap data obtained through the software filtering for the same to-be-displayed content next time, that is, the electronic device needs to perform only one rendering and software filtering operation on a newly appearing text, character, or image. After that, a software filtering result can be reused, to greatly reduce a calculation amount.

With reference to the second aspect, in some possible implementations, the obtaining, by using the processor, bitmap data of to-be-displayed content includes: determining, by using the processor, a vector map of the to-be-displayed content; and rasterizing, by using the processor, the vector map of the to-be-displayed content to obtain the bitmap data of the to-be-displayed content.

With reference to the second aspect, in some possible implementations, a data type of the to-be-displayed content includes a text, a character, and an image.

According to a third aspect, an embodiment of this application provides a computer storage medium, including computer instructions. When the computer instructions are run on an electronic device, a communication apparatus is enabled to perform the screen display method in any possible implementation of any foregoing aspect.

According to a fourth aspect, an embodiment of this application provides a computer program product. When the computer program product runs on a computer, the computer is enabled to perform the screen display method in any possible implementation of any foregoing aspect.

## BRIEF DESCRIPTION OF DRAWINGS

FIG. 1 is a schematic diagram of a structure of an electronic device according to an embodiment of this application;
FIG. 2a and FIG. 2b each are a schematic diagram of a sub-pixel arrangement manner according to an embodiment of this application;
FIG. 3a and FIG. 3b are schematic diagrams of a scenario of an interface display principle according to an embodiment of this application;
FIG. 4 is a schematic diagram of display effect of a sub-pixel rendering algorithm according to an embodiment of this application;
FIG. 5a and FIG. 5b are filtering principle diagrams of a sub-pixel rendering algorithm according to an embodiment of this application;
FIG. 6a and FIG. 6b are filtering principle diagrams of another sub-pixel rendering algorithm according to an embodiment of this application;
FIG. 7 is a schematic diagram of a structure of an electronic device according to an embodiment of this application;
FIG. 8a and FIG. 8b are schematic diagrams of display effect of a sub-pixel rendering algorithm according to an embodiment of this application;
FIG. 9 is a method flowchart of a screen display method according to an embodiment of this application;
FIG. 10a to FIG. 10c are schematic diagrams of display effect of a screen display method according to an embodiment of this application;
FIG. 11a to FIG. 11c are filtering principle diagrams of a screen display method according to an embodiment of this application;
FIG. 12 is a schematic diagram of another sub-pixel arrangement manner according to an embodiment of this application;
FIG. 13 is a schematic diagram of display effect of another sub-pixel rendering algorithm according to an embodiment of this application; and
FIG. 14 is a schematic diagram of a scenario of a screen display method according to an embodiment of this application.

## DESCRIPTION OF EMBODIMENTS

The following describes technical solutions in embodiments of this application with reference to accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as implying or implying relative importance or implicitly indicating a quantity of indicated technical features. Therefore, a feature limited by "first" or "second" may explicitly or implicitly include one or more of the features. In the descriptions of embodiments of this application, unless otherwise specified, "a plurality of" means two or more. Orientation or location relationships indicated by terms "middle", "left", "right", "up", "down", and the like are based on orientation or location relationships shown in the accompanying drawings, and are used only for describing this application and simplifying the description, rather than indicating or implying that an apparatus or an element referred to needs to have a specific orientation or needs to be constructed and operated in a specific orientation, and therefore cannot be construed as a limitation on this application.

The following first describes an electronic device 100 in embodiments of this application.

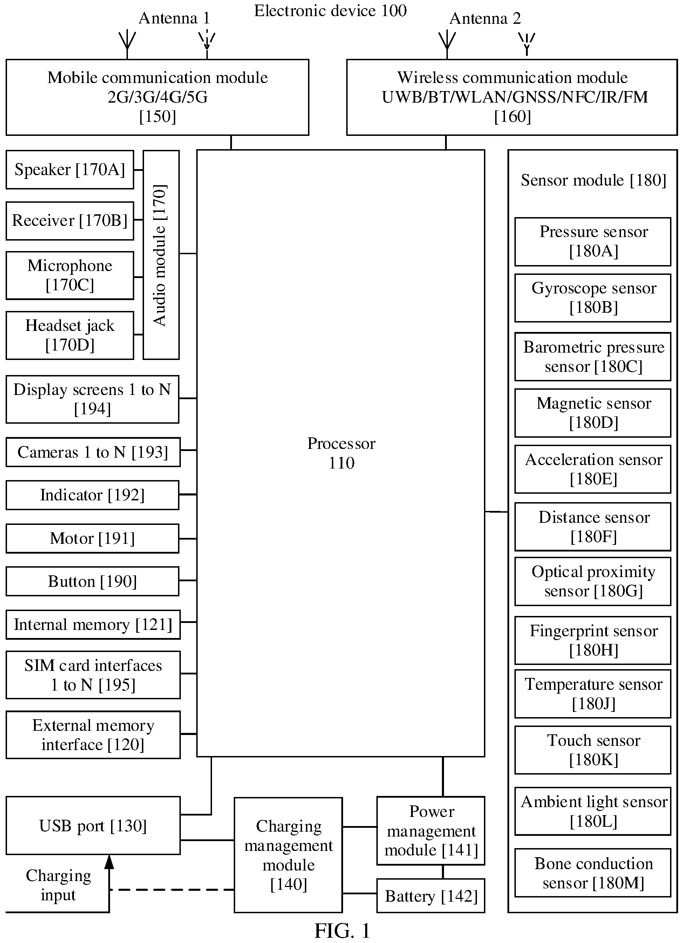

FIG. 1 is a schematic diagram of a structure of an example of the electronic device 100 according to an embodiment of this application.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in this embodiment of this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used to perform asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be used to connect the processor 110 to a peripheral component such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 100. The processor 110 communicates with the display screen 194 through the DSI interface, to implement a display function of the electronic device 100.

The GPIO interface may be configured by software. The GPIO interface may be configured as a control signal or a data signal. In some embodiments, the GPIO interface may be used to connect the processor 110 to the camera 193, the display screen 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be used to connect to the charger to charge the electronic device 100, or may be used to transmit data between the electronic device 100 and a peripheral device, or may be used to connect to a headset for playing audio through the headset. The interface may be further used to connect to another electronic device such as an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display screen 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs, which execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N display screens 194, where N is a positive integer greater than 1.

The electronic device 100 may implement an image shooting function through the ISP, the camera 193, the video codec, the GPU, the display screen 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is usually referred to as a DDR5 SDRAM), and the like.

The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like according to storage specifications.

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store an executable program, data of a user, data of an application, and the like, which may be loaded into the random access memory in advance for directly reading and writing by the processor 110.

The external memory interface 120 may be configured to connect to an external non-volatile memory, to extend a storage capability of the electronic device 100. The external non-volatile memory communicates with the processor 110 through the external memory interface 120, to implement a data storage function. For example, files such as music and videos are stored in the external non-volatile memory.

The electronic device 100 can implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB port 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display screen 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a change in the capacitance. When a touch operation is performed on the display screen 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100, and may detect magnitude and a direction of gravity when the electronic device 100 is still. The acceleration sensor may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a flip cover mode or a pocket mode to automatically perform screen unlocking or locking.

The ambient light sensor 180L is configured to sense ambient light brightness. The electronic device 100 may adaptively adjust brightness of the display screen 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display screen 194, and the touch sensor 180K and the display screen 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. The display screen 194 may provide a visual output related to the touch operation. In some other embodiments, the touch sensor 180K may also be disposed on a surface of the electronic device 100 at a location different from that of the display screen 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effect. The motor 191 may also correspond to different vibration feedback effect for touch operations performed on different regions of the display screen 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is used to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

An embodiment of this application provides a screen display method, to improve screen display effect.

For ease of understanding, with reference to the hardware structure of the electronic device 100, the following first describes related principles and related concepts in embodiments of this application.

(1) Types of the display screen 194.

Each pixel in the display screen 194 may be formed by three sub-pixels of red, green and blue (red green blue, RGB). A principle is that three primary colors of red, blue and green (RGB) may form any color. When different colors need to be displayed, the three sub-pixels respectively emit light at different display brightness, and may be visually mixed into required colors. Sub-pixels on different types of display screens are arranged in different manners.

a. LCD screen

Light emission of the LCD screen mainly depends on a backlight layer of the LCD screen. A backlight of the backlight layer is only white. Therefore, a color filter needs to be added to project the three primary colors. In addition, there is a liquid crystal layer that adjusts a voltage between the backlight layer and the color filter of the LCD screen, to control a ratio of red, green, and blue. Liquid droplets in the liquid crystal layer are included in a fine cell structure, and one or more cells constitute a pixel on the screen.

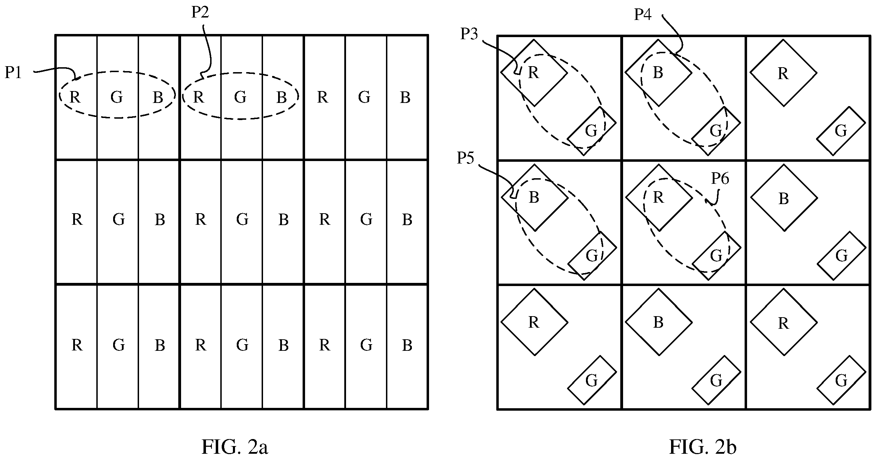

On the LCD screen, a single pixel of the LCD screen consists of three cells, through which red, blue and green are displayed on the screen. Therefore, the three cells are referred to as a red sub-pixel, a green sub-pixel, and a blue sub-pixel of each pixel. FIG. 2a shows an example of a sub-pixel arrangement manner on the LCD screen. Here, G represents a green sub-pixel, B represents a blue sub-pixel, and R represents a red sub-pixel. One green sub-pixel G, one blue sub-pixel B, and one red sub-pixel R form a group to form one pixel, and an arrangement sequence of three color sub-pixels is not limited.

b. OLED screen

The OLED screen is a display made of organic light-emitting diodes. On the OLED screen, a minimum light emitting unit can be considered as a sub-pixel, and each sub-pixel can emit only monochromatic (red, blue, or green) light. A sub-pixel that emits red light is referred to as a red sub-pixel, a sub-pixel that emits blue light is referred to as a blue sub-pixel, and a sub-pixel that emits green light is referred to as a green sub-pixel. Sub-pixels of the OLED screen may be arranged in a plurality of manners. For example, an arrangement manner is shown in FIG. 2b. A single pixel includes only two sub-pixels: red and green or blue and green. To be specific, each pixel includes one green sub-pixel and one red (or blue) sub-pixel, and pixels including a red sub-pixel and pixels including a blue sub-pixel are arranged at intervals in a horizontal direction and a vertical direction. It can be seen from FIG. 2b that when $3\times3$ pixels are displayed, the LCD screen has nine sub-pixels in the horizontal direction, while the OLED screen has only six sub-pixels in the horizontal direction. A quantity of sub-pixels is reduced by one third.

Only the three primary colors RGB can form all colors, and two colors cannot form all colors. Therefore, during actual image display, each pixel on the OLED screen in the arrangement manner shown in FIG. 2b forms the three primary colors RGB by using light emitting points of surrounding pixels of the pixel. This may also be referred to as color borrowing. For example, in FIG. 2a, a first pixel P1 includes sub-pixels of all three colors, and does not need to share a sub-pixel of any color from an adjacent second pixel P2. However, in FIG. 2b, a third pixel P3 includes a red sub-pixel and a green sub-pixel, and may share a blue sub-pixel from an adjacent fourth pixel P4. Herein, the blue sub-pixel in P4 is referred to as a compensation sub-pixel of the third pixel P3. One pixel may share a sub-pixel with a plurality of pixels, the third pixel P3 may further share a blue sub-pixel with a fifth pixel P5, and the third pixel P3 may further share a red sub-pixel with a sixth pixel P6.

There are other sub-pixel arrangement manners of the OLED screen, which are not listed one by one herein.

(2) Interface display principle

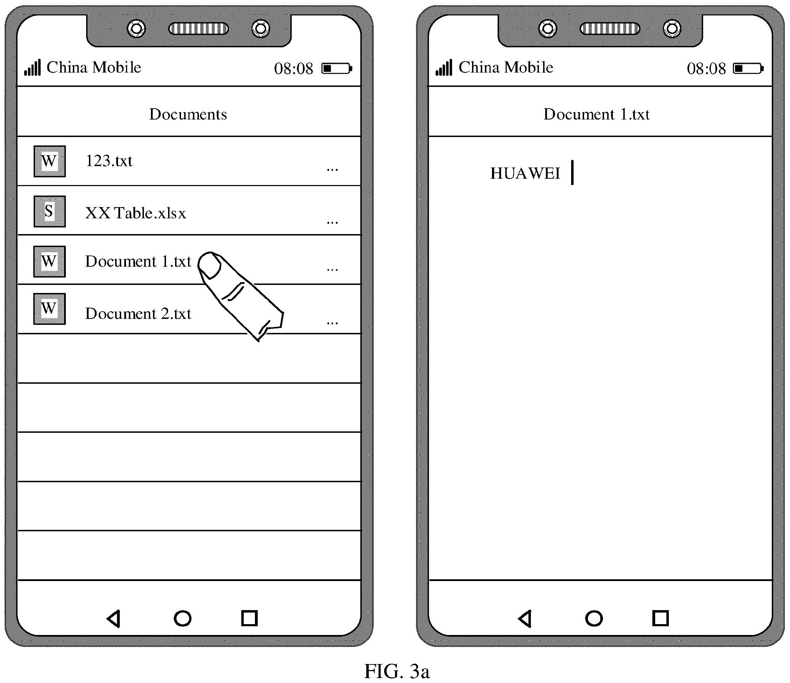

Interface content of a display interface of the electronic device 100 includes a text, an image, and the like. As shown in FIG. 3a, an example in which an application triggers displaying of "HUAWEI" in the device 100 is used for description. The application may be a reading application, a browsing application, a text editing application, or the like. For example, when a user opens, in a file management application by using the text editing application, a file "file 1.txt" including character content "HUAWEI", the text editing application needs to display the character on a user interface. Therefore, a character code corresponding to "HUAWEI" is sent, by invoking a text display interface in a system, to a text display module or frame of the electronic device for display. The character display module or frame of the electronic device 100 performs character typesetting on the field "HUAWEI" based on the character code corresponding to "HUAWEI", and determines a display form (including a size, a color, a font, a word spacing, a line spacing, and the like) and a display location (which may be pixel coordinates, which may be located in an upper left corner of the display location) of each character.

Subsequently, the electronic device 100 queries, in a corresponding font file, display data corresponding to each character (for example, for a character "E", the electronic device 100 queries, in a font file of an example font A, display data of the character "E" in the example font A). Currently, a commonly used font file type is a vector font, and display data of a character is stored in a form of a vector map. Specifically, a character contour is described by using a quadratic or cubic Bezier curve.

Then, the electronic device 100 renders a vector map of the display data of each character. A rendering process includes rasterization. The vector map may be converted into a bitmap through rasterization. A bitmap is formed by a plurality of pixels, and these pixels may be arranged and colored differently to form a pattern. Herein, if a to-be-displayed image is a color image, a bitmap of the to-be-displayed image includes grayscale value data of R, G, and B channels of each pixel (where a red grayscale value of each pixel forms a red vector matrix, a blue grayscale value of each pixel forms a blue vector matrix, and a green grayscale value of each pixel forms a green vector matrix). If the to-be-displayed image is a grayscale image, because grayscale values of three primary colors, namely, red, green, and blue, of the grayscale image are the same, the bitmap of the to-be-displayed image includes grayscale value data (a grayscale value vector matrix) of one channel of each pixel. For example, a pixel of a character bitmap usually only includes grayscale value data of one channel. The grayscale value ranges from 0 to 255.

For example, a resolution of an image is 500×338, and the image is a color image. Because a color of a pixel is represented by three values: R, G, and B, a pixel matrix of the image corresponds to three grayscale value vector matrices: a red (R) vector matrix (a size of 500×338), a green (G) vector matrix (a size of 500x338), and a blue (B) vector matrix (a size of 500x338). If values in a first row and a first column of each matrix are respectively R of 240, G of 223, and B of 204, a color of the pixel is (240, 223, 204).

For another example, a resolution of an image is 500×338, and the image is a grayscale image. Because grayscale values of three primary colors, namely, red, green, and blue, of each pixel in the bitmap are the same, a pixel matrix of the image corresponds to a vector matrix (a size of 500×338). If values of a first row and a first column of the matrix are 240, a color of the pixel is (240, 240, 240).

Then, the electronic device 100 performs hybrid superimposition and layer superimposition on a rendered bitmap. Hybrid superimposition means that a bitmap is pasted at a corresponding location of a picture, and a size of the picture is the same as a size of a display picture on an application interface. A manner of the hybrid superimposition includes CPU drawing and GPU drawing. Layer superimposition refers to combining application interfaces of a plurality of applications and interface display elements such as a status bar, a navigation bar, and a floating window into a to-be-displayed interface. A storage form of the to-be-displayed interface is a bitmap form with grayscale value data.

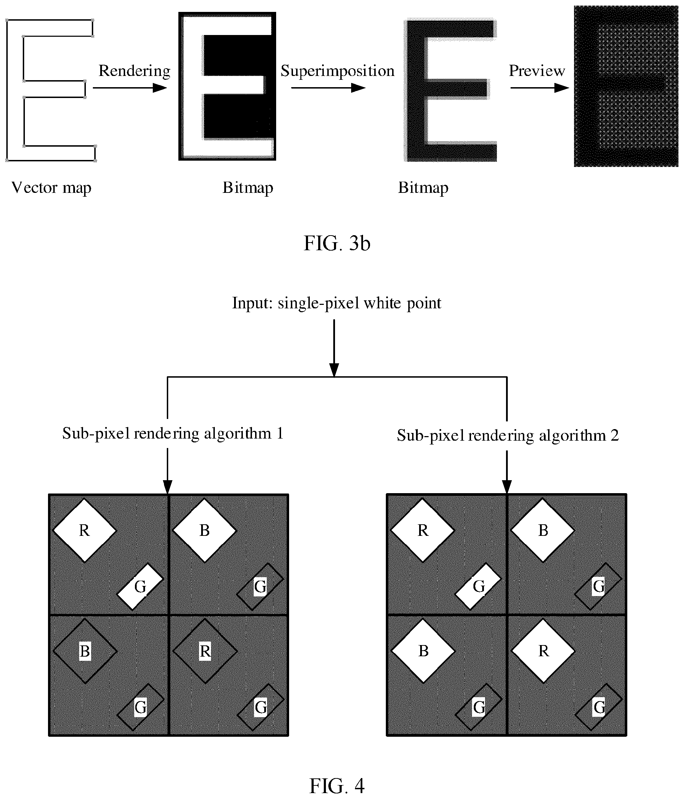

Finally, the electronic device 100 sends a superimposed to-be-displayed interface to the display screen. A display screen controller of the display screen lights up a light emitting point (a sub-pixel) on the display screen based on a sub-pixel rendering algorithm, and the to-be-displayed interface is displayed on the display screen. For example, as shown in FIG. 3b, a character "E" is used as an example in FIG. 3b. The electronic device 100 obtains display data (a vector map) of the character "E". The electronic device 100 renders the vector map to generate a bitmap including pixels, superimposes the bitmap and other display content to form a to-be-displayed interface, and finally sends the to-be-displayed interface to the display screen, and lights up a light emitting point on the screen based on the sub-pixel rendering algorithm.

The sub-pixel rendering algorithm may be integrated into the display screen controller to define how a display device lights up sub-pixels of different colors based on input data. Based on different sub-pixel rendering algorithms, manners of lighting up sub-pixels on the display device are also different. For example, when a sub-pixel arrangement manner on the display device of the electronic device 100 is a sub-pixel arrangement manner shown in FIG. 2b, as shown in FIG. 4, a single-pixel white point (where an RGB grayscale value of the single-pixel white point is (255, 255, 255)) is input. Three sub-pixels (one red sub-pixel, one blue sub-pixel, and one green sub-pixel) are lit up on the display device by using a sub-pixel rendering algorithm 1, so that human eyes can perceive white. Five sub-pixels (two red sub-pixels, two blue sub-pixels, and one green sub-pixel) are lit up on the display device by using a sub-pixel rendering algorithm 2, so that the human eyes can perceive white. When a same single-pixel color point is input, the three sub-pixels (the red sub-pixel, the blue sub-pixel, and the green sub-pixel) shown in FIG. 4 are also lit up on the display device by using the sub-pixel rendering algorithm 1, and display brightness of the three sub-pixels is determined based on an RGB grayscale value of the single-pixel color point. The five sub-pixels shown in FIG. 4 are also lit up on the display device by using the sub-pixel rendering algorithm 2, and display brightness of the five sub-pixels is determined based on the RGB grayscale value of the single-pixel color point.

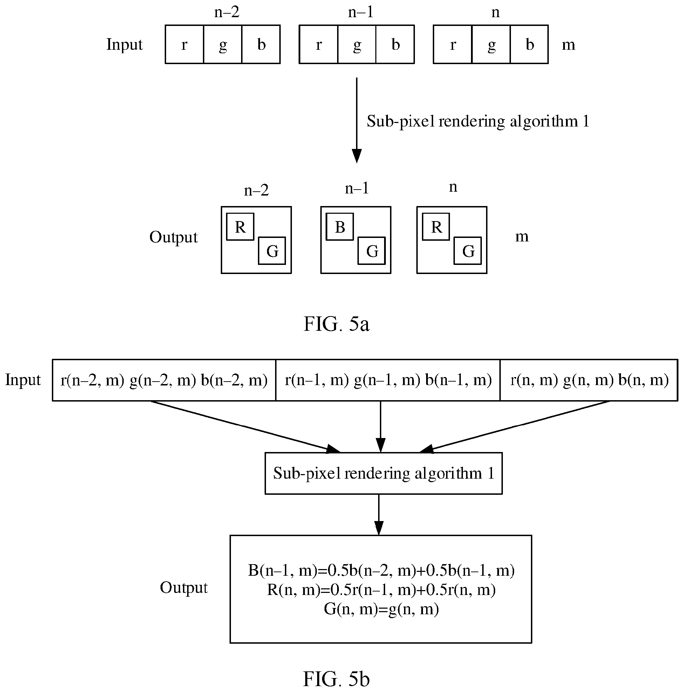

FIG. 5a and FIG. 5b illustrate in detail a technical principle of the sub-pixel rendering algorithm 1.

The electronic device 100 sends a bitmap of the to-be-displayed interface to the display screen. For example, a sub-pixel arrangement manner on the display screen is the sub-pixel arrangement manner shown in FIG. 2b, and the display screen controller of the display screen lights up a light emitting point (a sub-pixel) on the display screen based on the sub-pixel rendering algorithm 1.

As shown in FIG. 5a, the input bitmap of the to-be-displayed interface includes grayscale value data of R, G, and B channels, but one pixel on the display screen has only two light emitting points, which respectively correspond to one green sub-pixel and one red/blue sub-pixel. In FIG. 5a, a pixel (n-2, m), a pixel (n-1, m), and a pixel (n, m) are used as an example. By using the sub-pixel rendering algorithm 1, the pixel (n-1, m) may share a blue sub-pixel with the neighboring pixel (n-2, m), and the pixel (n, m) may share a red sub-pixel with the neighboring pixel (n-1, m). Green sub-pixels are in a one-to-one correspondence and do not need to be shared with other pixels.

As shown in FIG. 5b, a pixel grayscale value corresponding to each light emitting point on the display screen is determined by using the sub-pixel rendering algorithm 1. When the pixel (n-1, m) shares the blue sub-pixel with the neighboring pixel (n-2, m), a grayscale value of the blue sub-pixel of the pixel (n-1, m) is $B(n-1, m)=0.5b(n-2, m)+0.5b(n-1, m)$. When the pixel (n, m) shares the red sub-pixel with the neighboring pixel (n-1, m), a grayscale value of the red sub-pixel of the pixel (n, m) is $R(n, m)=0.5r(n-1, m)+0.5r(n, m)$. A grayscale value of the green sub-pixel is $G(n, m)=g(n, m)$. That a shared parameter among sub-pixels in FIG. 5b is 0.5 is merely an example, and does not constitute a limitation on embodiments of this application.

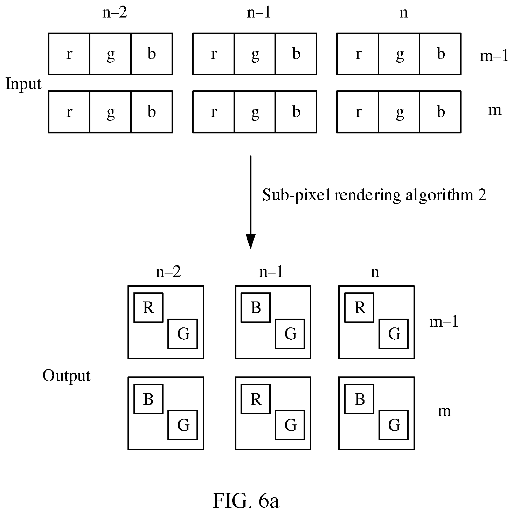

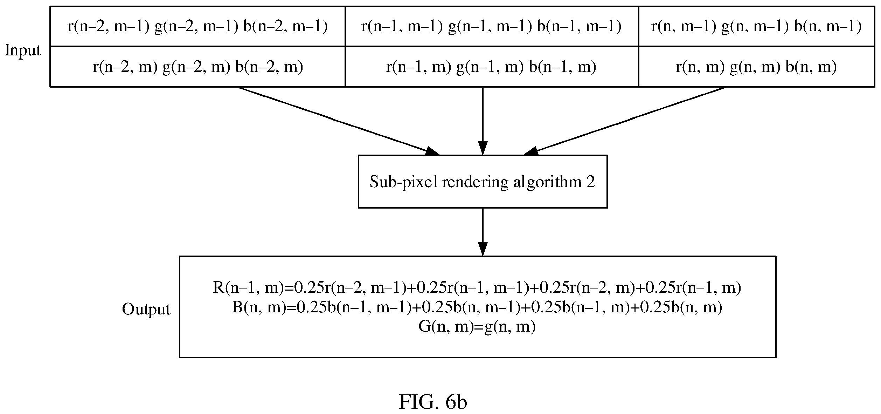

FIG. 6a and FIG. 6b illustrate in detail a technical principle of the sub-pixel rendering algorithm 2.

The electronic device 100 sends the bitmap of the to-be-displayed interface to the display screen. For example, the sub-pixel arrangement manner on the display screen is the sub-pixel arrangement manner shown in FIG. 2b, and the display screen controller of the display screen lights up a light emitting point (a sub-pixel) on the display screen based on the sub-pixel rendering algorithm 2.

As shown in FIG. 6a, the input bitmap of the to-be-displayed interface includes grayscale value data of R, G, and B channels, but one pixel on the display screen has only two light emitting points, which respectively correspond to one green sub-pixel and one red/blue sub-pixel. In FIG. 6a, a pixel (n-2, m), a pixel (n-1, m), a pixel (n, m), a pixel (n-2, m-1), a pixel (n-1, m-1), and a pixel (n, m-1) are used as an example. By using the sub-pixel rendering algorithm 2, the pixel (n-1, m) may share a blue sub-pixel with the surrounding pixel (n-2, m-1), the surrounding pixel (n-1, m-1), and the surrounding pixel (n-2, m), and the pixel (n, m) may share a red sub-pixel with the surrounding pixel (n-1, m-1), the surrounding pixel (n, m-1), and the surrounding pixel (n-1, m). Green sub-pixels are in a one-to-one correspondence and do not need to be shared with other pixels.

As shown in FIG. 6b, a pixel grayscale value corresponding to each light emitting point on the display is determined by using the sub-pixel rendering algorithm 2. When the pixel (n-1, m) shares the blue sub-pixel with the surrounding pixel (n-2, m-1), the surrounding pixel (n-1, m-1), and the surrounding pixel (n-2, m), a grayscale value of the blue sub-pixel of the pixel (n-1, m) is $B(n-1, m)=0.25b(n-2, m-1)+0.25b(n-1, m-1)+0.25b(n-2, m)+0.25b(n-1, m)$. When the pixel (n, m) shares the red sub-pixel with the surrounding pixel (n-1, m-1), the surrounding pixel (n, m-1), and the pixel (n-1, m), a grayscale value of the red sub-pixel of the pixel (n, m) is $R(n, m)=0.25r(n-1, m-1)+0.25r(n, m-1)+0.25r(n-1, m)+0.25r(n, m)$. A grayscale value of the green sub-pixel is $G(n, m)=g(n, m)$. That a shared parameter among sub-pixels in FIG. 6b is 0.25 is merely an example, and does not constitute a limitation on embodiments of this application.

Currently, a sub-pixel rendering algorithm exists in a form of a hardware algorithm, is fixed in a DDIC or a processing chip, and is difficult to update by software.

The foregoing describes a display principle of a character as an example. The interface content of the display interface of the electronic device 100 includes a character and an image. Similar to the display principle of the character of the electronic device 100, for a display principle of the image, the electronic device 100 performs image decoding on a to-be-displayed image to obtain to-be-displayed image data, and the image display module or frame of the electronic device 100 performs typesetting on a to-be-displayed image based on the image data, to determine a display form (including a display size, a color, and the like) and a display location (which may be pixel coordinates and located at an upper left corner of the display location) of the to-be-displayed image. The image data is stored in a form of a vector map or a bitmap. Then, the electronic device 100 renders a vector map of the to-be-displayed image, to generate a bitmap.

Then, the electronic device 100 performs hybrid superimposition and layer superimposition on a rendered bitmap, pastes the bitmap at a corresponding location of a picture, and then combines application interfaces of a plurality of applications and interface display elements such as a status bar and a navigation bar into a to-be-displayed interface, where a size of the picture is the same as a size of a display picture of an application. Finally, the electronic device 100 sends a superimposed to-be-displayed interface to the display screen. The display screen controller of the display screen lights up a light emitting point on the display screen based on the sub-pixel rendering algorithm and the arrangement manner of the light emitting point (a sub-pixel) on the display screen, and the to-be-displayed interface is displayed on the display screen.

In this embodiment of this application, display of a white single pixel requires light emitting of sub-pixels of three colors: red, green, and blue. For the LCD screen, one pixel includes sub-pixels of three colors, so one pixel can display a white single pixel. However, for a diamond arrangement of the foregoing OLED screen, one pixel has only sub-pixels of two color, and therefore, a sub-pixel needs to be borrowed from a surrounding pixel to display a white single pixel.

Based on the foregoing interface display principle, the following describes a hardware structure of an electronic device 101 with a display screen, and further describes a sub-pixel rendering algorithm in a display principle of an OLED display screen. In some embodiments, the electronic device 101 may be mounted or integrated on the electronic device 100, and the electronic device 100 may include the electronic device 101.

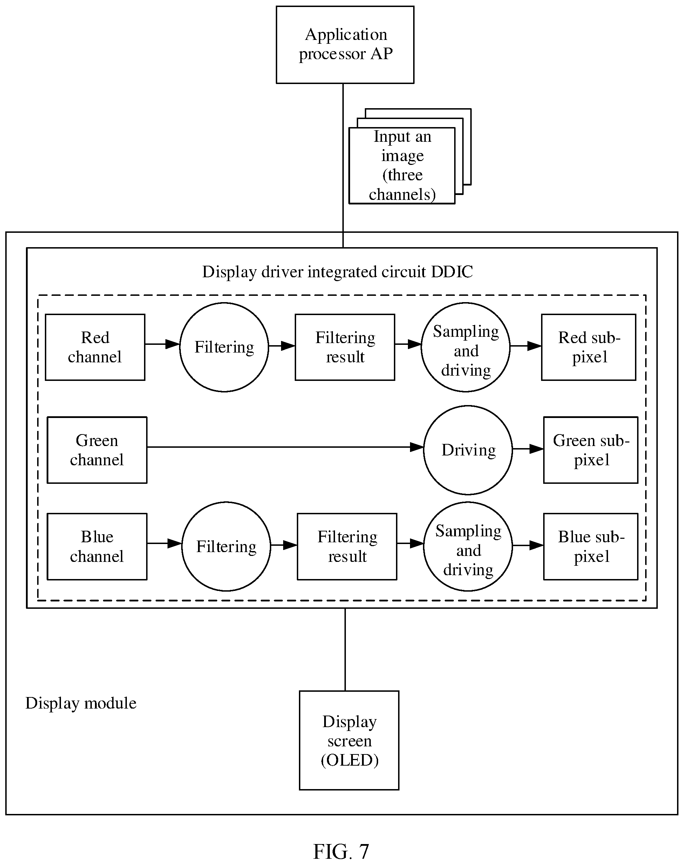

FIG. 7 is a diagram of the hardware structure of the electronic device 101. The electronic device 101 includes an application processor AP and a display module. The display module includes a display screen and a display driver integrated circuit (display driver integrated circuit, DDIC). The DDIC is one of main components of a display screen controller, and a sub-pixel rendering algorithm is integrated into the DDIC. The DDIC is used to drive the display screen and light up a light emitting point (a sub-pixel) on the display screen based on the sub-pixel rendering algorithm. The display screen may be the foregoing OLED screen, and the sub-pixels may be arranged in the foregoing diamond arrangement manner. The application processor AP typesets, renders, and superimposes interface content (including a text, an image, and the like) into a bitmap, and sends the bitmap to the DDIC. The DDIC performs filtering and sampling on the received bitmap. After the filtering and the sampling, the DDIC determines display brightness of sub-pixels, converts display brightness of each sub-pixel into a form such as a voltage or a current, drives the OLED screen, and lights up a light emitting point (a sub-pixel) on the OLED screen with the corresponding voltage or current. In some embodiments, the DDIC and the AP may be integrated into a same chip. Optionally, the DDIC may alternatively be integrated into the OLED display screen.

The bitmap sent by the application processor AP to the DDIC is a rasterized bitmap, the bitmap includes pixels, and the bitmap includes grayscale value data of R, G, and B channels of each pixel or grayscale value data of one channel of each pixel. After the DDIC receives the bitmap sent by the application processor AP, the DDIC divides the bitmap into three channels for processing, where the three channels are a green channel, a red channel, and a blue channel. The display brightness of the sub-pixels on the display screen is determined with reference to the sub-pixel rendering algorithm (including performing filtering and sampling and the like) and a sub-pixel arrangement manner of the display screen. The DDIC converts the display brightness of each sub-pixel into a form such as a voltage or a current, drives the display screen, and lights up a corresponding light emitting point on the display screen.

For example, in FIG. 7, the DDIC divides a bitmap processing process into a green channel, a red channel, and a blue channel. A green vector matrix (including a pixel grayscale value of a green sub-pixel of each pixel) of the bitmap is processed in the green channel, a red vector matrix (including a pixel grayscale value of a red sub-pixel of each pixel) of the bitmap is processed in the red channel, and a blue vector matrix (including a pixel grayscale value of a blue sub-pixel of each pixel) of the bitmap is processed in the blue channel. Because every two pixels in the diamond arrangement of the OLED screen have only one red sub-pixel and one blue sub-pixel, the red sub-pixel and the blue sub-pixel need to be used as compensation pixels of surrounding pixels, and pixel grayscale values of the red sub-pixel and the blue sub-pixel are related to the surrounding pixels. That is, for the red channel and the blue channel, the electronic device 100 needs to perform filtering and sampling on the bitmap, to determine pixel grayscale values of the red sub-pixel and the blue sub-pixel on the OLED screen. Therefore, in the red channel and the blue channel, the DDIC needs to filter and sample the input bitmap. Then, based on a filtered and sampled bitmap, the DDIC converts a pixel grayscale value of the filtered bitmap into a form such as a voltage or a current, drives the OLED screen, and lights up a red light emitting point and a blue light emitting point on the OLED screen with the corresponding voltage or current. In addition, because each pixel in the diamond arrangement of the OLED screen has a green sub-pixel, and display brightness of the green sub-pixel is irrelevant to another pixel, filtering and sampling are not required for the green channel. The DDIC may directly input a bitmap to the green channel, convert a pixel grayscale value of the bitmap into a form such as a voltage or a current, drive the OLED screen, and light up a green light emitting point on the OLED screen with the corresponding voltage or current.

For the foregoing filtering manner, the following describes two filtering manners as examples, including one-dimensional filtering and two-dimensional filtering.

The one-dimensional filtering may be filtering in a horizontal direction or filtering in a vertical direction, and is referred to as 1D-SPR for short hereinafter.

A formula of the one-dimensional filtering may be:

$$dst(x,y) = \sum_{\substack{0 \le x' < kernel.cols \\ 0 \le y' < kernel.rows}} kernel(x',y') \times src(x + x' - anchor.x, y + y' - anchor.y)$$

Here, dst (x, y) is a pixel grayscale value of an output pixel (x, y), and src (x, y) is a pixel grayscale value of an input pixel (x, y). Here, kernel is a convolution kernel. For example, if a filter core for one-dimensional filtering in a horizontal direction is (0.5, 0.5), a value of kernel is (0.5, 0.5). The filter core is a matrix of 1×2. In this case, a value of x' is 0 and 1, that is, kernel.cols is 2, and a value of y' is 0, that is, kernel.cols is 1. Here, anchor is an anchor point, anchor.x is a horizontal coordinate of the anchor point, and anchor.y is a vertical coordinate of the anchor point. For example, an anchor point of the one-dimensional filtering in a horizontal direction is (0, 0). Each value in an output matrix is equal to a sum of a result obtained by multiplying an input matrix by a location element corresponding to the convolution kernel.

Filtering in a horizontal direction is used as an example, and a filter core of the filtering in a horizontal direction may be described as (0.5, 0.5). For example, for the red channel, the electronic device 100 performs horizontal filtering on the input bitmap with a filter core of (0.5, 0.5), and a grayscale value of each pixel in a filtering result is an average of grayscale values of two adjacent pixels in the input bitmap, that is, L_r (x, y)=(I_r (x, y)+I_r (x+1, y))/2, where L_r (x, y) is a red pixel grayscale value of an output pixel (x, y), I_r (x, y) is a red pixel grayscale value of an input pixel (x, y), a horizontal coordinate of the anchor point anchor is 0, a vertical coordinate of the anchor point is 0, and a value of the kernel convolution kernel is (0.5, 0.5). In this case, the red pixel grayscale value L_r (x, y)=(I_r (x, y)+I_r (x+1, y))/2 of the pixel (x, y) may be obtained based on the foregoing one-dimensional filtering formula.

Herein, refer to the filtering manner of the sub-pixel rendering algorithm 1 shown in FIG. 5a and FIG. 5b, namely, the one-dimensional filtering in a horizontal direction. The filter core is (0.5, 0.5).

The DDIC may determine, based on a grayscale value of each pixel in the red channel and the sub-pixel arrangement manner on the display screen, display brightness of each red sub-pixel on the display screen by performing steps such as sampling and driving on the foregoing filtering result. That is, display brightness of each red/blue sub-pixel is related to grayscale values of two adjacent pixels in a bitmap of the input channel.

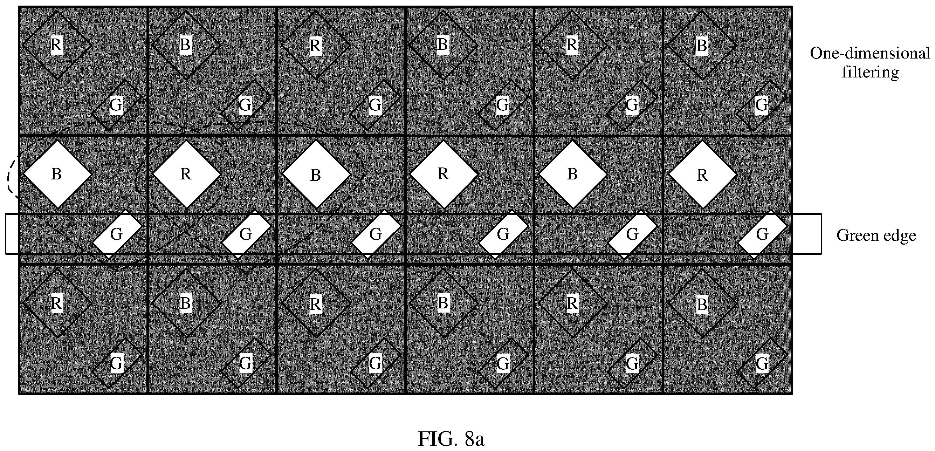

As shown in FIG. 8a, after horizontal filtering and sampling are performed, a white point may be displayed by using three sub-pixels: red, green, and blue. It can be learned that because filtering is performed only in a horizontal direction, a green sub-pixel exposed to an edge exists at a horizontal line and a horizontal stroke edge of a text. When the electronic device 100 displays a black-white boundary line in the horizontal direction, a color edge (a green edge) phenomenon is visually caused. Because the human eyes are most sensitive to green, the green sub-pixel exposed to the edge will produce an obvious green edge and have a strong sense of pixelation.

The two-dimensional filtering is filtering performed in both the horizontal direction and a vertical direction, which is referred to as 2D-SPR for short hereinafter. For example, a filter core of the two-dimensional filtering may be described as $\begin{pmatrix} 0.25 & 0.25 \\ 0.25 & 0.25 \end{pmatrix}$ . For example, for the red channel, the electronic device 100 performs the two-dimensional filtering on an input bitmap with a filter core of $\begin{pmatrix} 0.25 & 0.25 \\ 0.25 & 0.25 \end{pmatrix}$ , and a grayscale value of each pixel in a filtering result is an average of grayscale values of four pixels in a surrounding 2×2 region in the input bitmap, that is, L_r (x, y)=(I_r (x, y)+I_r (x+1, y)+I_r (x, y+1)+I_r (x+1, y+1))/4. Herein, refer to the filtering manner of the sub-pixel rendering algorithm 2 shown in FIG. 6a and FIG. 6b, namely, the two-dimensional filtering. The filter core is $\begin{pmatrix} 0.25 & 0.25 \\ 0.25 & 0.25 \end{pmatrix}$ .

The DDIC may determine, based on a grayscale value of each pixel in the red channel and the sub-pixel arrangement manner on the display screen, display brightness of each red sub-pixel on the display screen by performing steps such as sampling and driving on the foregoing filtering result. That is, display brightness of each red/blue sub-pixel is related to grayscale values of four adjacent pixels in the horizontal direction and the vertical direction in a bitmap of the input channel.

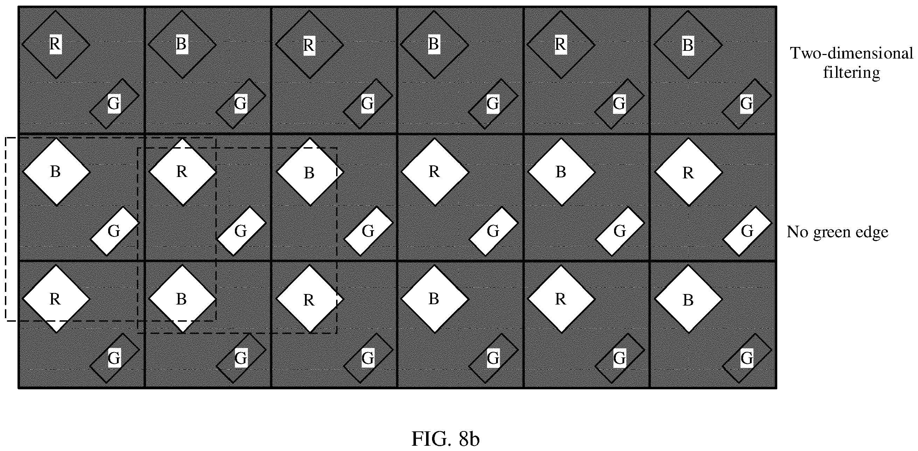

As shown in FIG. 8b, after the two-dimensional filtering and sampling are performed, a white point may be displayed by using two red sub-pixels, two blue sub-pixels, and one green sub-pixel. It can be learned that all green sub-pixels are surrounded by red sub-pixels and blue sub-pixels, and brightness is low at edges (25% red display brightness and 25% blue display brightness), and specific brightness gradient effect is achieved. In this case, when the electronic device 100 displays the black-and-white boundary line in the horizontal direction, no color edge (green edge) phenomenon is visually caused.

To sum up, the sub-pixel rendering algorithm determines how the DDIC lights up sub-pixels of different colors on the display screen based on the input data. However, the sub-pixel rendering algorithm is a hardware algorithm and cannot be updated by software. In a case of horizontal filtering, when the black-and-white boundary line in the horizontal direction (for example, a horizontal stroke edge of a text) is displayed on the OLED screen on which sub-pixels are arranged in the diamond arrangement manner, a color edge phenomenon is visually caused. After the electronic device 100 equipped with the electronic device 101 is selected, manufactured, produced, and sold, a sub-pixel arrangement and the sub-pixel rendering algorithm of the electronic device 101 cannot be changed in a software update manner, and display effect is difficult to be optimized.

An embodiment of this application provides a screen display method, so as to resolve a color edge phenomenon and improve screen display effect of a display screen without changing a sub-pixel arrangement of the display screen and without changing a sub-pixel rendering algorithm.

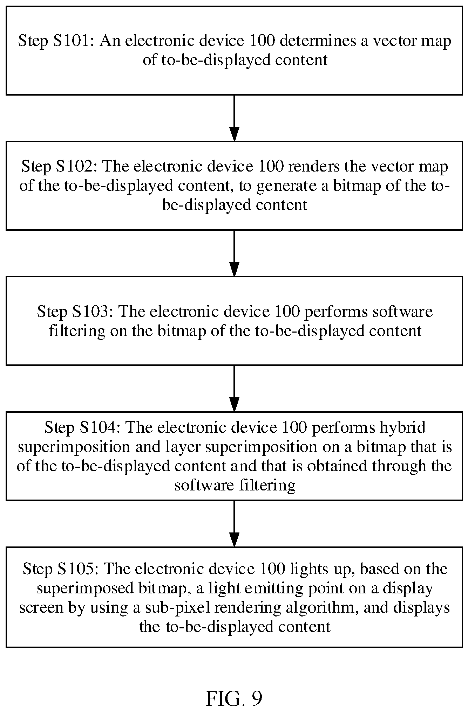

The following describes a step procedure of the screen display method provided in this application. As shown in FIG. 9, the method may include the following steps.

Step S101: The electronic device 100 determines a vector map of to-be-displayed content.

The electronic device 100 obtains the to-be-displayed content, where the to-be-displayed content may be a text, a character, an image, and the like. The electronic device 100 determines a display form (a display location, a size, a color, and the like) of the to-be-displayed content, to form the vector map of the to-be-displayed content.

Optionally, the electronic device 100 determines a display form of an image on a display interface based on image data to be displayed in the to-be-displayed content and the display location, and determines a display form of a text on the display interface based on text data to be displayed in the to-be-displayed content, the display location, and a font file, to form the vector map of the to-be-displayed content.

Step S102: The electronic device 100 renders the vector map of the to-be-displayed content, to generate a bitmap of the to-be-displayed content.

After determining the vector map of the to-be-displayed content, the electronic device 100 renders the vector map of the to-be-displayed content, that is, rasterizes the vector map, and converts an image represented by the vector map into the bitmap. The bitmap includes a plurality of pixels, and the bitmap includes grayscale value data of R, G, and B channels of each pixel or grayscale value data of one channel of each pixel. Herein, the electronic device 100 generates the bitmap of the to-be-displayed content.

In some embodiments, step S101 and step S 102 are optional, and the electronic device 100 may directly obtain the bitmap of the to-be-displayed content. For example, the electronic device 100 receives a bitmap of to-be-displayed content sent by another device. For another example, the electronic device 100 invokes a bitmap of the to-be-displayed content stored in the electronic device 100.

Step S 103: The electronic device 100 performs software filtering on the bitmap of the to-be-displayed content.

After the electronic device 100 generates the bitmap of the to-be-displayed content, the electronic device 100 performs software filtering processing on the bitmap, to generate a bitmap obtained through the software filtering. There are a plurality of software filtering manners. This is not limited in embodiments of this application. In some embodiments, a filtering parameter of the software filtering herein is determined based on a sub-pixel rendering algorithm, and the software filtering is used to optimize a display edge of the to-be-displayed content on a display panel of the display screen.

Optionally, a processing direction of the software filtering is perpendicular to a processing direction of one-dimensional filtering in the sub-pixel rendering algorithm.

For example, when a resampling filter core used in the sub-pixel rendering algorithm in the DDIC is (0.5, 0.5), in this case, the electronic device 100 performs the software filtering on the bitmap of the to-be-displayed content, and a filter core is $\begin{pmatrix}0.5\\0.5\end{pmatrix}$. The software filtering $\begin{pmatrix}0.5\\0.5\end{pmatrix}$ and the resampling filter (0.5, 0.5) are jointly combined to form a virtual resampling filter $\begin{pmatrix}0.25 & 0.25\\0.25 & 0.25\end{pmatrix}$.

When the resampling filter core used in the sub-pixel rendering algorithm is $\begin{pmatrix}0.5\\0.5\end{pmatrix}$, in this case, the electronic device 100 filters the bitmap of the to-be-displayed content, and the filter core is (0.5, 0.5). The software filtering (0.5, 0.5) and the resampling filter $\begin{pmatrix}0.5\\0.5\end{pmatrix}$ are jointly combined to form the virtual resampling filter $\begin{pmatrix}0.25 & 0.25\\0.25 & 0.25\end{pmatrix}$. It can be learned that the foregoing two cases are used to enable a final filtering result to achieve two-dimensional filtering effect.

In some embodiments, the bitmap of the to-be-displayed content includes RGB three-channel bitmap data and single-channel grayscale bitmap data. The RGB three-channel bitmap data includes grayscale value data (a red pixel grayscale value, a blue pixel grayscale value, and a green pixel grayscale value of each pixel) of R, G, and B channels of each pixel. Because the red pixel grayscale value, the blue pixel grayscale value, and the green pixel grayscale value of each pixel in a grayscale bitmap are the same, a single-channel grayscale bitmap includes grayscale value data of one channel of each pixel. The red pixel grayscale value of each pixel forms a red channel in the bitmap data, the blue pixel grayscale value of each pixel forms a blue channel in the bitmap data, and the green pixel grayscale value of each pixel forms a green channel in the bitmap data.

When the bitmap of the to-be-displayed content includes RGB three-channel bitmap data, the electronic device separately performs single-pixel channel software filtering processing on a red pixel grayscale value and a blue pixel grayscale value in the bitmap data, and determines a filtered red pixel grayscale value and a filtered blue pixel grayscale value. A green pixel grayscale value is kept unchanged. The single-pixel channel software filtering processing refers to performing software filtering processing on one channel of the RGB three-channel bitmap data. In this case, the electronic device 100 obtains the filtered bitmap.

For example, the bitmap of the to-be-displayed content includes a first red pixel grayscale value, a first blue pixel grayscale value, and a first green pixel grayscale value of each pixel. The electronic device 100 separately filters the red channel and the blue channel in the bitmap to obtain the filtered bitmap. The filtered bitmap includes a second red pixel grayscale value, a second blue pixel grayscale value, and the first green pixel grayscale value of each pixel.

When the bitmap of the to-be-displayed content includes single-channel grayscale bitmap data, the electronic device first converts the single-channel grayscale bitmap data into RGB three-channel bitmap data. If a size of an original bitmap (the bitmap of the to-be-displayed content) is [w, h], the electronic device 100 allocates a memory whose size is [w, h, 3] to convert the single-channel grayscale bitmap data into RGB three-channel bitmap data (that is, a red pixel grayscale value, a blue pixel grayscale value, and a green pixel grayscale value of each pixel are the same). The electronic device separately performs single-pixel channel software filtering processing on a red pixel grayscale value and a blue pixel grayscale value in the RGB three-channel bitmap data, and determines a filtered red pixel grayscale value and a filtered blue pixel grayscale value. A green pixel grayscale value is kept unchanged. In this case, the electronic device 100 obtains the filtered bitmap. The filtered bitmap includes the RGB three-channel bitmap data.

For example, the bitmap of the to-be-displayed content includes a first pixel grayscale value of each pixel, that is, the red pixel grayscale value, the blue pixel grayscale value, and the green pixel grayscale value of each pixel are all first pixel grayscale values. First, the electronic device copies the grayscale bitmap to the green channel. Then, the electronic device 100 filters the grayscale bitmap to obtain a second pixel grayscale value. The electronic device 100 separately copies a filtered grayscale bitmap to the red channel and the blue channel to obtain a filtered bitmap. The filtered bitmap includes the red pixel grayscale value (the second pixel grayscale value), the blue pixel grayscale value (the second pixel grayscale value), and the green pixel grayscale value (the first pixel grayscale value) of each pixel.

For example, the following uses displaying a letter "E" as an example. Siyuan boldface is used, and a font size is 8. After rasterization and gamma mapping, the following bitmap is obtained. A size of the bitmap is 7×11, and a character bitmap generally includes single-channel grayscale bitmap data. Specific bitmap data is shown in Table 1.

## Table 1

| Input bitmap data | | | | | | | Schematic display effect |
|---|---|---|---|---|---|---|---|
| Pixel grayscale values in the bitmap data: | | | | | | | As shown in FIG. 10a |
| 255 | 255 | 255 | 255 | 255 | 255 | 255 | |
| 255 | 35 | 0 | 0 | 0 | 71 | 255 | |
| 255 | 35 | 221 | 255 | 255 | 255 | 255 | |
| 255 | 35 | 221 | 255 | 255 | 255 | 255 | |
| 255 | 35 | 221 | 255 | 255 | 255 | 255 | |
| 255 | 35 | 0 | 0 | 0 | 221 | 255 | |
| 255 | 35 | 221 | 255 | 255 | 255 | 255 | |
| 255 | 35 | 221 | 255 | 255 | 255 | 255 | |
| 255 | 35 | 221 | 255 | 255 | 255 | 255 | |
| 255 | 35 | 0 | 0 | 0 | 35 | 255 | |
| 255 | 255 | 255 | 255 | 255 | 255 | 255 | |

The software filtering is performed on the bitmap data of the letter "E". The electronic device performs the single-pixel channel software filtering processing on a red pixel grayscale value and a blue pixel grayscale value, and a green pixel grayscale value of the bitmap data is kept unchanged, to obtain bitmap data that is obtained through the software filtering and that is shown in Table 2.

## Table 2

| Bitmap data obtained through the software filtering | | | | | | | Schematic display effect |
|---|---|---|---|---|---|---|---|
| Red/blue pixel grayscale values in the bitmap data | | | | | | | As shown in FIG. 10b |
| 255 | 187 | 186 | 186 | 186 | 190 | 255 | |
| 255 | 187 | 186 | 186 | 186 | 190 | 255 | |
| 255 | 33 | 161 | 186 | 186 | 190 | 255 | |
| 255 | 33 | 220 | 255 | 255 | 255 | 255 | |
| 255 | 33 | 220 | 255 | 255 | 255 | 255 | |
| 255 | 33 | 161 | 186 | 186 | 238 | 255 | |

| Bitmap data obtained through the software filtering | | | | | | | Schematic display effect |
|---|---|---|---|---|---|---|---|
| 255 | 33 | 161 | 186 | 186 | 238 | 255 | |
| 255 | 33 | 220 | 255 | 255 | 255 | 255 | |
| 255 | 33 | 220 | 255 | 255 | 255 | 255 | |
| 255 | 33 | 161 | 186 | 186 | 187 | 255 | |
| 255 | 187 | 186 | 186 | 186 | 187 | 255 | |
| 255 | 255 | 255 | 255 | 255 | 255 | 255 | |

Green pixel grayscale values in the bitmap data

| 255 | 35 | 0 | 0 | 0 | 71 | 255 |
|---|---|---|---|---|---|---|
| 255 | 35 | 221 | 255 | 255 | 255 | 255 |
| 255 | 35 | 221 | 255 | 255 | 255 | 255 |
| 255 | 35 | 221 | 255 | 255 | 255 | 255 |
| 255 | 35 | 0 | 0 | 0 | 221 | 255 |
| 255 | 35 | 221 | 255 | 255 | 255 | 255 |
| 255 | 35 | 221 | 255 | 255 | 255 | 255 |
| 255 | 35 | 221 | 255 | 255 | 255 | 255 |
| 255 | 35 | 0 | 0 | 0 | 35 | 255 |
| 255 | 255 | 255 | 255 | 255 | 255 | 255 |

In some embodiments, if a to-be-displayed bitmap is in a non-linear domain, degamma mapping (transformation from the non-linear domain to a linear domain) needs to be performed before the software filtering is performed, and the gamma mapping (transformation from the linear domain to the non-linear domain) needs to be performed again after the software filtering is performed. If the to-be-displayed bitmap is in the linear domain, filtering is performed directly. In practice, the degamma mapping and the gamma mapping may cause data precision loss and errors.

In some embodiments, a filtering parameter in the software filtering manner is determined with reference to information of the display screen of the electronic device 100. The information of the display screen includes a model and a quantity of the display screen, a display direction of the display screen, and the like.

Models of different display screens may be different. The electronic device 100 may determine, by using the model of the display screen, a sub-pixel rendering algorithm integrated into the display screen. The electronic device 100 may determine, by using a filtering manner used in the sub-pixel rendering algorithm, a software filtering manner of the electronic device 100.

There may be a plurality of display screens in the electronic device 100. Models of the plurality of display screens may be different, and software filtering manners of the electronic device 100 are also different for display screens of different models. When the electronic device 100 switches the display screen for display, a software filtering manner of the electronic device 100 for the to-be-displayed content may be switched. The electronic device 100 determines, based on a display screen on which the to-be-displayed content is currently displayed, a software filtering manner for the to-be-displayed content.

A display direction of the display screen of the electronic device 100 includes landscape orientation (90 degrees and 270 degrees) and portrait orientation (0 degrees and 180 degrees). The electronic device 100 determines a software filtering manner of the electronic device 100 based on a current display direction of the display screen. Because the sub-pixel rendering algorithm is a hardware algorithm, a filtering direction in the sub-pixel rendering algorithm is fixed. When the display direction of the display screen changes, the typesetting of the to-be-displayed content also changes. In this case, the filtering parameter of the software filtering also needs to be changed accordingly. For example, when the resampling filter core used in a sub-pixel rendering algorithm is (0.5, 0.5), if a current display direction of the electronic device 100 is portrait orientation (0 degrees), a filter core for the software filtering of the electronic device 100 is $\binom{0.5}{0.5}$ ; or if a current display direction of the electronic device 100 is landscape orientation (90 degrees), a filter core for the software filtering of the electronic device 100 is (0.5, 0.5). Optionally, the filtering parameter is not only a filter core, filtering parameters of landscape orientation at different angles are also different, and filtering parameters of portrait orientation at different angles are also different. For example, in two portrait orientation forms, filter cores obtained when display directions of the electronic device 100 are 0 degrees and 180 degrees are both (0.5, 0.5). However, one filter core is an average of a current pixel and a pixel on a left side of the current pixel, the other filter core is an average of the current pixel and a pixel on a right side of the current pixel, and generated filtering results are different.

Herein, the electronic device 100 changes the filtering parameter of the software filtering based on the model of the electronic device and a change of a status of the electronic device (the display screen) (for example, switching between different display screens or a change of the display direction of the display screen). In this way, display effect of the display screen in different cases can be resolved, and practicability and flexibility of this application can be improved.

The following uses an example in which the electronic device 100 performs the software filtering processing on a single-channel bitmap (where each pixel in the bitmap includes grayscale information of one channel), and the filter core for software filtering is (0.5, 0.5). Example code is shown as follows:

```
auto filter = [&preBlend](uint8_t curPoint, uint8_t refPoint) -> uint16_t {

    // RGBG resample filter [0.5; 0.5] (current point, next row point)

    uint8_t rb = sk_float_round2int(curPoint * 0.5 + refPoint * 0.5);

    uint8_t g = curPoint;

    return packTriple(sk_apply_lut_if<APPLY_PREBLEND>(rb, preBlend.fR),

                        sk_apply_lut_if<APPLY_PREBLEND>(g,

preBlend.fG),

                        sk_apply_lut_if<APPLY_PREBLEND>(rb,

preBlend.fB));

    };

    const uint8_t* src = buffer;

    const uint8_t* srcNextline = src + width;

    for (int y = 0; y < height; ++y) {

    for (int x = 0; x < width; ++x) {

    dst[x] = filter(src[x], srcNextline[x]);

        }

    dst += width;

    src += width;

    srcNextline += width;

    }
```

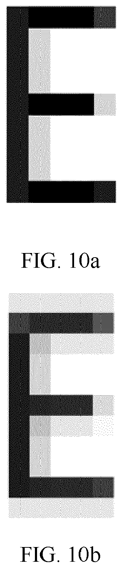

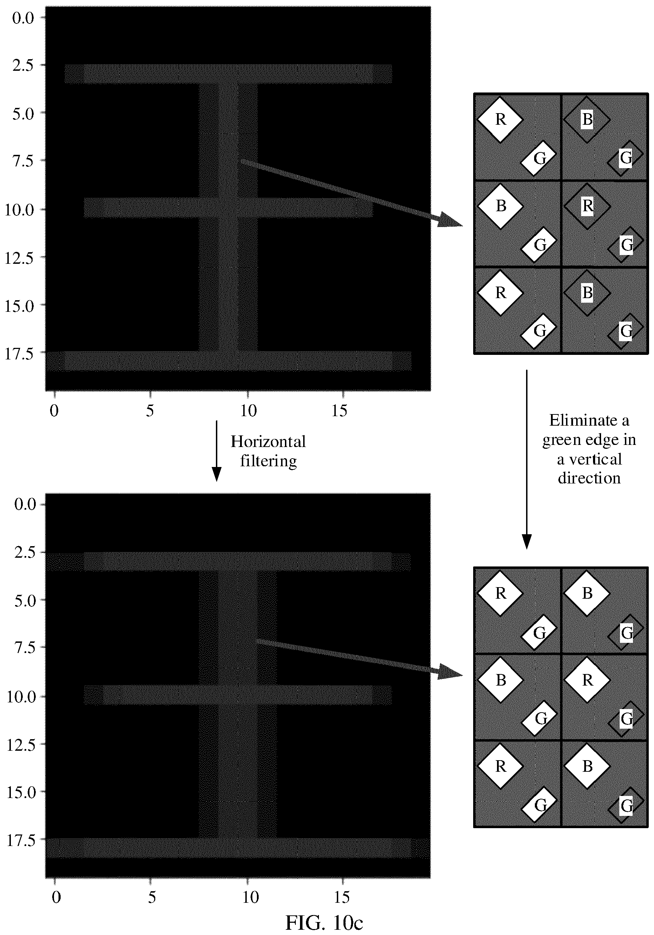

A word "王" is displayed as an example. FIG. 10c shows an example of schematic display effect of bitmap data extracted from a red channel or a blue channel before and after filtering. Before the filtering, a green edge exists on a vertical stroke of the word "王". After horizontal filtering by a filter whose filter core is (0.5, 0.5), the vertical stroke of the word "王" is widened in a red channel and a blue channel. Due to filtering in a horizontal direction, color compensation is performed on a red sub-pixel and a blue sub-pixel of an adjacent pixel in a horizontal direction, thereby eliminating the green edge in a vertical direction.

Similarly, if the bitmap is vertically filtered by a filter whose filter core is $\begin{pmatrix} 0.5 \\ 0.5 \end{pmatrix}$, a horizontal stroke of the word "王" becomes wider (thicker). Because of filtering in a vertical direction, color compensation is performed on a red sub-pixel and a blue sub-pixel of an adjacent pixel in the vertical direction, thereby eliminating the green edge in the horizontal direction.

Subsequently, the electronic device 100 sends filtered content to a display. A filter core of a sub-pixel rendering algorithm in the display is $\begin{pmatrix} 0.5 \\ 0.5 \end{pmatrix}$ . After secondary filtering and sampling processes of a resampling filter of the sub-pixel rendering algorithm, the DDIC drives the display screen to light up a sub-pixel on the screen. It can be learned that the horizontal filtering (0.5, 0.5) and the resampling filter $\begin{pmatrix} 0.5 \\ 0.5 \end{pmatrix}$ are combined into a virtual resampling filter $\begin{pmatrix} 0.25 & 0.25 \\ 0.25 & 0.25 \end{pmatrix}$ , that is the method can enable a 1D SPR electronic device to achieve display effect similar to that of a 2D SPR electronic device.

Step S104: The electronic device 100 superimposes the filtered bitmap.

After obtaining the filtered bitmap, the electronic device 100 pastes the bitmap at a corresponding location in a picture. A size of the picture is the same as a size of a display picture of an application, so that the bitmap can be displayed on the display screen of the electronic device in a size of a display picture of the display screen. A manner of the hybrid superimposition includes CPU drawing and GPU drawing. Then, the electronic device 100 combines application interfaces of a plurality of applications and interface display elements such as a status bar and a navigation bar into a to-be-displayed interface.

Step S105: The electronic device 100 lights up, based on the superimposed bitmap, a light emitting point on the display screen by using the sub-pixel rendering algorithm, and displays the to-be-displayed content.

The electronic device 100 sends the superimposed bitmap to the display screen. A display screen controller (DDIC) of the display screen lights up the light emitting point (a sub-pixel) on the display screen based on the superimposed bitmap by using a sub-pixel rendering algorithm, so that the to-be-displayed content is displayed on the display screen of the electronic device 100.

The following specifically describes a process in which the electronic device 100 processes the superimposed bitmap by using the sub-pixel rendering algorithm.

The superimposed bitmap includes grayscale value information (a red grayscale value, a blue grayscale value, and a green grayscale value of each pixel) of R, G, and B channels. For the red channel and the blue channel, the electronic device 100 needs to perform the filtering on the input bitmap (the superimposed bitmap), to determine pixel grayscale values of a red sub-pixel and a blue sub-pixel. Because every two pixels in a diamond arrangement of an OLED screen have only one red sub-pixel and one blue sub-pixel, the red sub-pixel and the blue sub-pixel need to be used as compensation pixels of surrounding pixels, and display brightness of the red sub-pixel and the blue sub-pixel is related to the surrounding pixels of the red sub-pixel and the blue sub-pixel. In step S103, the electronic device 100 performs software filtering on the red channel and the blue channel once. Herein, the electronic device 100 performs secondary filtering on the red channel and the blue channel based on the sub-pixel rendering algorithm, to determine the pixel grayscale values of the red sub-pixel and the blue sub-pixel. Therefore, in the red channel and the blue channel, based on a filtered and sampled bitmap, the DDIC converts a pixel grayscale value of the filtered bitmap into a form such as a voltage or a current, drives the OLED screen, and drives, by using the corresponding voltage or current, a red light emitting point and a blue light emitting point on the OLED screen to emit light. It should be noted that the filtering manner herein is different from the filtering manner in step S103. The filtering manner herein is determined by the sub-pixel rendering algorithm integrated into the DDIC in the electronic device 100, and is difficult to change in a software update manner.

For the green channel, the foregoing resampling and filtering processes do not need to be performed. The DDIC may directly input the superimposed bitmap to the green channel, convert a pixel grayscale value of a green sub-pixel on the superimposed bitmap into a form such as a voltage or a current, drive the display screen, and light up a green light emitting point on the display screen by using the corresponding voltage or current. The electronic device 100 displays the to-be-displayed content corresponding to the superimposed bitmap.

In this embodiment of this application, the electronic device 100 performs pre-filtering processing (software filtering) on the to-be-displayed content before the to-be-displayed content is sent to the display screen, and works together with a resampling filter in a sub-pixel rendering algorithm, to change display effect. This embodiment of this application resolves a problem that the sub-pixel rendering algorithm cannot be updated online.

The following uses an example in which a filter core for the software filtering is $\begin{pmatrix} 0.5 \\ 0.5 \end{pmatrix}$ and a resampling filter core used in the sub-pixel rendering algorithm in the DDIC is (0.5, 0.5). When a sub-pixel arrangement manner on the display screen is the sub-pixel arrangement manner shown in FIG. 2b, filtering effect implemented by a combination of the software filtering and the sub-pixel rendering algorithm is described in detail. The software filtering $\begin{pmatrix} 0.5 \\ 0.5 \end{pmatrix}$ and the

resampling filter (0.5, 0.5) are jointly combined to form a virtual resampling filter $\begin{pmatrix} 0.25 & 0.25 \\ 0.25 & 0.25 \end{pmatrix}$ .

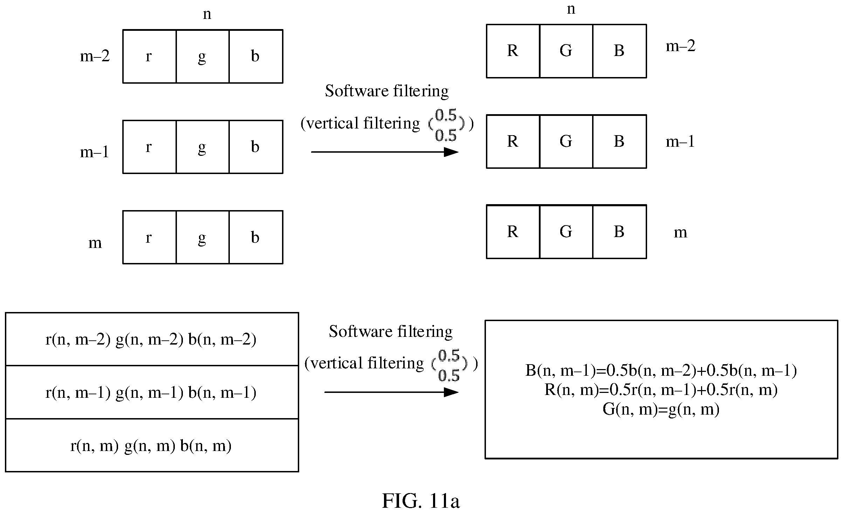

As shown in FIG. 11a, after the electronic device 100 generates a bitmap of the to-be-displayed content, the electronic device 100 performs the software filtering processing on the bitmap. The bitmap of the to-be-displayed content includes grayscale value data of the R, G, and B channels. The electronic device 100 performs the software filtering on the red channel and the blue channel with a filter core $\begin{pmatrix} 0.5 \\ 0.5 \end{pmatrix}$ , to determine a grayscale value of each pixel in the bitmap. A grayscale value of a blue sub-pixel of a pixel (n, m-1) after filtering is B(n, m-1)=0.5b(n, m-2)+0.5b(n, m-1). A grayscale value of a red sub-pixel of a pixel (n, m) after filtering is R(n,m)=0.5r(n, m-1)+0.5r(n, m). A grayscale value of a green sub-pixel is G(n, m)=g(n, m).

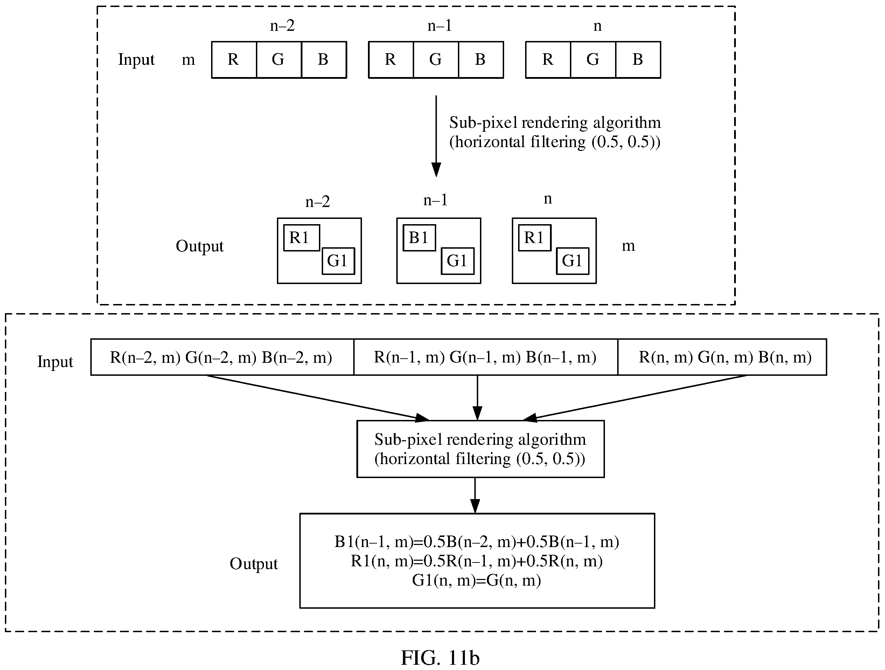

As shown in FIG. 11b, the electronic device 100 sends a filtered bitmap to the display screen. The display screen controller of the display screen lights up a light emitting point (a sub-pixel) on the display screen based on the sub-pixel rendering algorithm. A filter core of the sub-pixel rendering algorithm is (0.5, 0.5). With the sub-pixel rendering algorithm, a pixel (n-1, m) may share a blue sub-pixel with an adjacent pixel (n-2, m), and the pixel (n, m) may share a red sub-pixel with the adjacent pixel (n-1, m). Green sub-pixels are in a one-to-one correspondence and do not need to be shared with other pixels. In FIG. 11b, with the sub-pixel rendering algorithm, a grayscale value of the blue sub-pixel of the pixel (n-1, m) is B1(n-1, m)=0.5B(n-2, m)+0.5B(n-1, m). A grayscale value of the red sub-pixel of the pixel (n, m) is R1(n, m)=0.5R(n-1, m)+0.5R(n, m). A grayscale value of the green sub-pixel is G(n, m)=g(n, m).

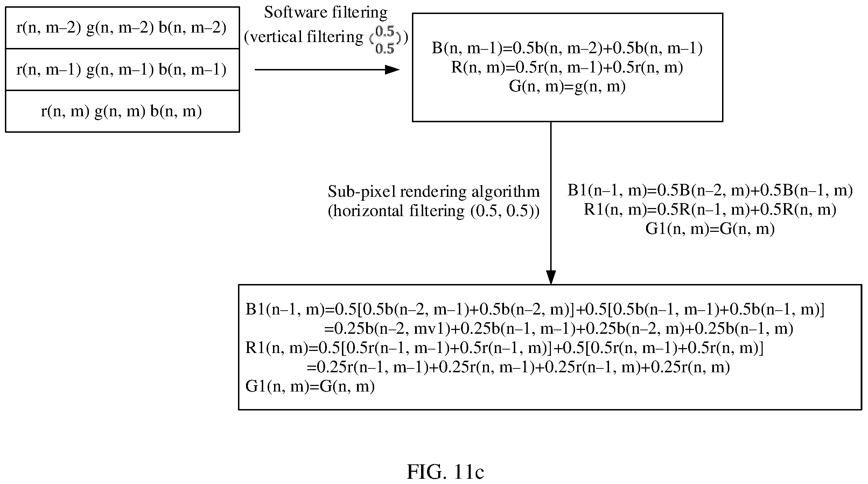

As can be seen from FIG. 11c, the software filtering $\begin{pmatrix} 0.5 \\ 0.5 \end{pmatrix}$ and the resampling filter (0.5, 0.5) are jointly combined to form the virtual resampling filter $\begin{pmatrix} 0.25 & 0.25 \\ 0.25 & 0.25 \end{pmatrix}$ . That is, the method enables the 1D SPR electronic device to obtain display effect similar to that of the 2D SPR electronic device, and resolves a color edge phenomenon generated when the sub-pixel rendering algorithm is one-dimensional filtering without changing the sub-pixel rendering algorithm.

In some embodiments, the foregoing preprocessing of the software filtering algorithm (step S 103) may occur at any stage in the process of rendering and preview (sending to the display screen). When the to-be-displayed content is a text, the preprocessing of the software filtering algorithm may occur between any two steps of rasterization, hybrid superimposition, layer superimposition, and preview. If the to-be-displayed content is an image, a UI image, or a 3D picture, the preprocessing of the software filtering algorithm may occur between any two steps of image decoding, rasterization, hybrid superimposition, layer superimposition, and preview.

In the foregoing method procedure, step S 103 is integrated after the rasterization process (step S102) and before the hybrid superimposition process (step S104). If step S103 is performed after the superimposition process (step S 104) and before the preview (step S105), after obtaining the bitmap of the to-be-displayed content, the electronic device 100 performs a hybrid superimposition process and a layer superimposition process, and then performs the software filtering on the superimposed bitmap. The electronic device 100 sends the filtered bitmap to the display screen, lights up a light emitting point on the display screen by using the sub-pixel rendering algorithm, and displays the to-be-displayed content. Herein, before performing the software filtering on the superimposed bitmap, the electronic device 100 needs to transform the superimposed bitmap onto a linear domain, and then, after performing the software filtering, transforms the filtered bitmap back to a nonlinear domain again.

In some embodiments, the electronic device 100 uses different processing manners based on different properties (such as a text, an image, or a vector graphic) of the to-be-displayed content. Optionally, the electronic device 100 performs step S 103 only on a text or a character. Compared with another UI element in the display interface, a text stroke edge has a high contrast, and cases such as a color edge and a sense of pixelation are most obvious on the text stroke edge. Therefore, only a text part on the UI interface may be processed, so that computing resources of the electronic device 100 can be saved without affecting display effect too much.

In some embodiments, in step S101, the electronic device 100 obtains the to-be-displayed content, and determines a display form of the to-be-displayed content. The electronic device 100 queries, based on the to-be-displayed content, whether the bitmap of the to-be-displayed content is stored in the electronic device 100. If the to-be-displayed content is a text or a character, the electronic device 100 queries, based on the to-be-displayed content and the display form (a font, a size, and the like of the to-be-displayed content), whether the bitmap of the to-be-displayed content in the display form is stored in the electronic device 100. If the to-be-displayed content is an image, the electronic device 100 queries, based on the to-be-displayed content and the display form (a display size of the image or the like), whether the bitmap of the to-be-displayed content in the display form is stored in the electronic device 100.

If the bitmap of the to-be-displayed content is stored, the electronic device 100 invokes the bitmap of the to-be-displayed content, and directly performs step S104. Optionally, if the bitmap of the to-be-displayed content is not stored, the electronic device 100 performs step S102 and step S103. After rendering and filtering the to-be-displayed content, the electronic device generates the bitmap of the to-be-displayed content. Herein, the electronic device 100 stores the bitmap of the displayed content for next invocation.

The electronic device 100 needs to perform only one rendering and software filtering operation on a newly appearing text, character, or image. After that, a software filtering result can be reused, to greatly reduce a calculation amount.

In some embodiments, before the electronic device 100 performs step S103, the electronic device 100 determines, based on a current status of the electronic device 100, whether to perform step S103. When the current status of the electronic device 100 meets a preset condition, the electronic device 100 performs step S103.

The preset condition includes that the electronic device 100 is not currently in a scenario such as an image shooting sharing scenario or a screen projection scenario. For example, when the electronic device 100 receives an image shooting sharing operation, the electronic device 100 captures an image, and sends the image to another electronic device by using an application. Image data sent by the electronic device 100 to the another electronic device is a bitmap. If the electronic device 100 performs a preset filtering operation on the captured image, the sent image data is a bitmap obtained through the software filtering. For example, when a preset filter core for the software filtering is (0.5, 0.5), an image obtained through the software filtering is an image with a green edge (for example, as shown in FIG. 6a). The another electronic device receives the image with a green edge, and display effect of the image on the another electronic device is affected. Therefore, when the electronic device 100 is not currently in the image shooting sharing scenario, the electronic device 100 performs step S103.

Similarly, when the electronic device 100 receives a screen projection enabling operation, the electronic device 100 sends the captured image to the another electronic device in real time for display. If the electronic device 100 performs the preset filtering operation on the captured image, the sent image data is the bitmap obtained through the software filtering. The another electronic device receives the bitmap obtained through the software filtering, and display effect of the bitmap on the another electronic device is affected. Therefore, when the electronic device 100 is not currently in the screen projection scenario, the electronic device 100 performs step S103. Optionally, when the electronic device 100 receives a screen projection disabling operation, the electronic device 100 resumes performing step S103.

In conclusion, a manner of improving display effect of the display screen described in the foregoing embodiment is applicable to a case in which the display screen of the electronic device 100 is an OLED screen and the sub-pixel arrangement manner is a diamond arrangement. There are a plurality of sub-pixel arrangement manners of the OLED screen, and the arrangement manner is not limited to the diamond arrangement. The screen display method provided in embodiments of this application is also applicable to a display screen in another sub-pixel arrangement manner, thereby improving display effect of display screens in different arrangement manners.

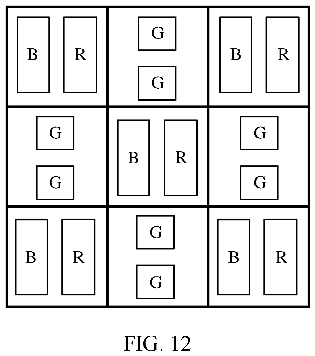

FIG. 12 shows an example of another sub-pixel arrangement manner of an OLED display screen. The arrangement manner shown in FIG. 12 includes two types of pixels. One type of pixel includes one red sub-pixel and one blue sub-pixel, and the other type of pixel includes two green sub-pixels. The two types of pixels are arranged at intervals in a horizontal direction and a vertical direction. In this arrangement manner, different sub-pixel rendering algorithms can achieve different display effect. The following briefly describes, as an example, four sub-pixel rendering algorithms applicable to this arrangement manner.

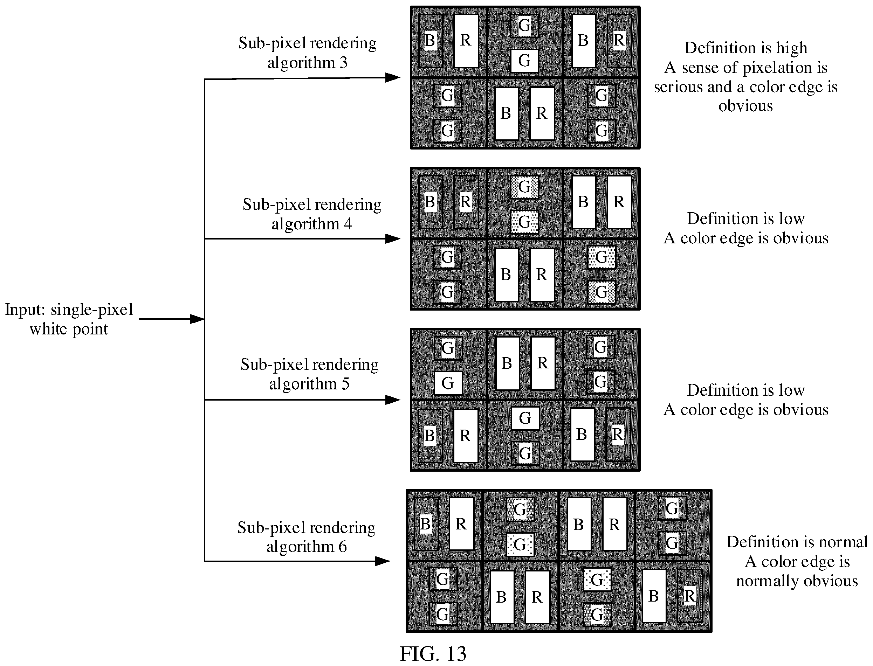

As shown in FIG. 13, when a single-pixel white point is input (where an RGB grayscale value of the single-pixel white point is (255, 255, 255)) is input, five sub-pixels, including two red sub-pixels, two blue sub-pixels, and one green sub-pixel, are lit up on a display device by using a sub-pixel rendering algorithm 3. Brightness of the two red sub-pixels is the same, and brightness of the two blue sub-pixels is the same. A lighting manner implemented by the sub-pixel rendering algorithm 3 can enable human eyes to perceive white, and actual effect is that definition is high, but a sense of pixelation is serious and a color edge is obvious.

Eight sub-pixels are lit up on the display device by using a sub-pixel rendering algorithm 4, including two red sub-pixels, two blue sub-pixels, and four green sub-pixels. Brightness of the two red sub-pixels is the same, brightness of the two blue sub-pixels is the same, and brightness of the four green sub-pixels is different. For example, display brightness borne by two green sub-pixels is 37.5%, and brightness borne by the other two green sub-pixels is 12.5%. A lighting manner implemented by the sub-pixel rendering algorithm 4 can enable human eyes to perceive white, and actual effect is that definition is low, and a color edge is obvious.

Six sub-pixels are lit up on the display device by using a sub-pixel rendering algorithm 5, including two red sub-pixels, two blue sub-pixels, and two green sub-pixels. Brightness of the two red sub-pixels is the same, brightness of the two blue sub-pixels is the same, and brightness of the two green sub-pixels is the same. A lighting manner implemented by the sub-pixel rendering algorithm 5 can enable human eyes to perceive white, and actual effect is that definition is low, and a color edge is obvious.

Ten sub-pixels are lit up on the display device by using a sub-pixel rendering algorithm 6, including three red sub-pixels, three blue sub-pixels, and four green sub-pixels. Brightness of the three red sub-pixels is the same, brightness of the three blue sub-pixels is the same, and brightness of the four green sub-pixels is different. For example, display brightness borne by two green sub-pixels is 37.5%, and brightness borne by the other two green sub-pixels is 12.5%. A lighting manner implemented by the sub-pixel rendering algorithm 6 can enable human eyes to perceive white, and actual effect is that definition is normal, and a color edge is normally obvious.

It can be learned that the DDIC provides a capability of adjusting a sub-pixel rendering algorithm to some extent, but a quantity of adjustable parameters and a parameter range are small. The foregoing four sub-pixel rendering algorithms all have problems of unclearness and obvious color edges to different degrees, and satisfactory effect cannot be achieved. Therefore, display effect of the foregoing display screen cannot be improved by changing a sub-pixel rendering algorithm.

According to the screen display method provided in embodiments of this application, the electronic device 100 performs the pre-filtering processing on the to-be-displayed content before the to-be-displayed content is sent to the display screen, and works together with the sub-pixel rendering algorithm, to finally achieve effect of high definition and no color edge phenomenon, thereby improving display effect. A problem that the sub-pixel rendering algorithm cannot be updated online is resolved.

The pre-filtering processing herein is that after the electronic device 100 obtains the to-be-displayed content and performs the typesetting and the rendering on the to-be-displayed content, the electronic device 100 performs the software filtering processing on the bitmap of the to-be-displayed content.

When the bitmap of the to-be-displayed content includes the grayscale value data of the R, G, and B channels of each pixel (the red grayscale value, the blue grayscale value, and the green grayscale value of each pixel). The electronic device 100 filters the green channel in the bitmap, and determines a pixel grayscale value obtained after filtering is performed on the bitmap in the green channel. In this case, the electronic device 100 obtains the filtered bitmap.

For example, the bitmap of the to-be-displayed content includes a third red pixel grayscale value, a third blue pixel grayscale value, and a third green pixel grayscale value of each pixel. The electronic device 100 filters the green channel in the bitmap to obtain a filtered bitmap. The filtered bitmap includes the third red pixel grayscale value, the third blue pixel grayscale value, and a fourth green pixel grayscale value of each pixel.

When the bitmap of the to-be-displayed content includes grayscale value data of one channel of each pixel, if a size of an original bitmap is [w, h], the electronic device 100 allocates a memory whose size is [w, h, 3] to store the filtered bitmap. The filtered bitmap includes grayscale value data of R, G, and B channels. First, the electronic device 100 copies the original bitmap to two channels in the filtered bitmap, where the two channels are the red channel and the blue channel. For the foregoing sub-pixel arrangement manner, a red sub-pixel and a blue sub-pixel do not need to be adjusted to achieve ideal display effect. Therefore, the filtering does not need to be performed for the red channel and the blue channel, and the electronic device 100 may directly copy the original bitmap to the red channel and the blue channel.

Second, the electronic device 100 performs the software filtering on the original bitmap to determine a pixel grayscale value of a green sub-pixel, and then copies a grayscale bitmap obtained through the software filtering to another channel, where the channel is the green channel. In this case, the electronic device 100 obtains the filtered bitmap.

For example, the bitmap of the to-be-displayed content includes a third pixel grayscale value of each pixel, that is, a red pixel grayscale value, a blue pixel grayscale value, and a green pixel grayscale value of each pixel are all third pixel grayscale values. First, the electronic device copies the grayscale bitmap to the red channel and the blue channel. Then, the electronic device 100 filters the grayscale bitmap to obtain a fourth pixel grayscale value. The electronic device 100 copies a filtered grayscale bitmap to the green channel to obtain the filtered bitmap. The filtered bitmap includes the red pixel grayscale value (the third pixel grayscale value), the blue pixel grayscale value (the third pixel grayscale value), and the green pixel grayscale value (the fourth pixel grayscale value) of each pixel.

For example, a filter core in the foregoing software filtering manner may be described as (0.125, 0.75, 0.125). In the sub-pixel rendering algorithm 3, brightness of a green sub-pixel is 100%, and the brightness of the green sub-pixel may be divided into three green sub-pixels by using the filtering processing, so that brightness borne by the three green sub-pixels is respectively 12.5%, 75%, and 12.5%.

Then, the electronic device 100 sends filtered content to the display, and after filtering and sampling processes of the resampling filter of the display screen control chip (DDIC), a sub-pixel on the screen is lit up.

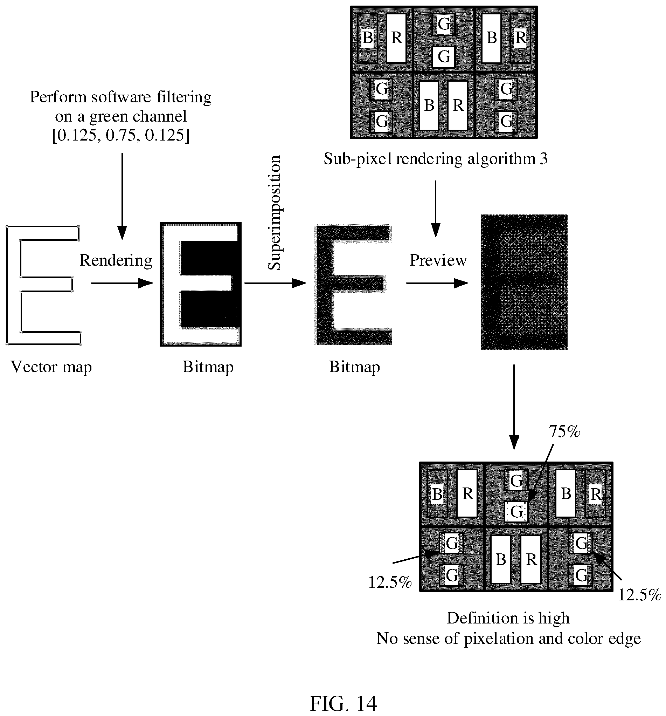

For example, as shown in FIG. 14, a character "E" is used as an example. The electronic device 100 queries, in a font file of an example font A, display data of the character "E" in the example font A, and the display data is stored in a form of a vector map. Then, the electronic device 100 renders a vector map of a character "⬚", to generate a bitmap. The bitmap includes a plurality of pixels. The bitmap includes grayscale value data of R, G, and B channels of each pixel (where a red grayscale value of each pixel forms a red vector matrix, a blue grayscale value forms a blue vector matrix, and a green grayscale value forms a green vector matrix). The electronic device 100 performs software filtering on the green channel in the bitmap, and a filter core of the software filtering may be (0.125, 0.75, 0.125).

Then the electronic device 100 performs hybrid superimposition and layer superimposition on a filtered bitmap.

Finally, the electronic device 100 sends a superimposed bitmap to the display screen, and the display screen controller of the display screen performs secondary filtering based on the resampling filter in the sub-pixel rendering algorithm, to determine final grayscale value information of the R, G, and B channels. The electronic device 100 converts a pixel grayscale value of a bitmap obtained through the secondary filtering into a form such as a voltage or a current, drives the OLED screen, and lights up a light emitting point (a sub-pixel) on the display screen by using the corresponding voltage or current, to display the character bitmap on the display screen.

It can be learned that the foregoing software filtering (0.125, 0.75, 0.125) works together with the resampling filter in the sub-pixel rendering algorithm 3, so that display effect better than that implemented by the sub-pixel rendering algorithm 3 can be implemented.

It may be understood that a filtering parameter in the foregoing software filtering manner may be adjusted as required, and a software filtering parameter for the sub-pixel rendering algorithm 4 is different from a software filtering parameter for the sub-pixel rendering algorithm 3. The foregoing software filtering parameter is determined based on the sub-pixel rendering algorithm of the electronic device 100 and desired display effect.

In some embodiments, the foregoing preprocessing of the software filtering algorithm may occur at any stage in a process of image rendering and preview (sending to the display screen).

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk), or the like.

A person of ordinary skill in the art may understand that all or some of the processes of the methods in embodiments may be implemented by a computer program instructing related hardware. The program may be stored in a computer-readable storage medium. When the program runs, the processes of the method embodiments may be included. The foregoing storage medium includes any medium that can store program code, such as a ROM, a random access memory RAM, a magnetic disk, or an optical disc.

**Claims**

1. A screen display method, applied to an electronic device, wherein the electronic device comprises an OLED display panel and a display screen controller integrating a sub-pixel rendering algorithm, and the method comprises:

   obtaining, by the electronic device, bitmap data of to-be-displayed content;
   performing, by the electronic device, software filtering on the bitmap data, wherein the software filtering is determined based on the sub-pixel rendering algorithm and is used to optimize a display edge of the to-be-displayed content on the OLED display panel;
   performing, by the display screen controller, sub-pixel rendering on bitmap data obtained through the software filtering, to determine an RGB grayscale value of each pixel; and
   driving, by the display screen controller based on the RGB grayscale value, an OLED light-emitting point on the OLED display panel to display the to-be-displayed content.

2. The method according to claim 1, wherein the performing, by the electronic device, software filtering on the bitmap data comprises:

   the bitmap data comprises RGB three-channel bitmap data and single-channel grayscale bitmap data;
   when the bitmap data is single-channel grayscale bitmap data, converting the bitmap data into RGB three-channel bitmap data;
   separately performing, by the electronic device, single-pixel channel software filtering processing on a red pixel grayscale value and a blue pixel grayscale value of the RGB three-channel bitmap data; and

keeping, by the electronic device, a green pixel grayscale value of the bitmap data unchanged.

3. The method according to claim 2, wherein the single-pixel channel software filtering processing comprises:
a direction of the single-pixel channel software filtering processing is perpendicular to a direction of one-dimensional filtering processing in the sub-pixel rendering algorithm.

4. The method according to claim 3, wherein a formula of the one-dimensional filtering comprises:

$$dst(x, y) = \sum_{\substack{0 \le x' < kernel.cols \\ 0 \le y' < kernel.rows}} kernel(x', y') \times src(x + x' - anchor.x, y + y' - $$

anchor.y), wherein
dst (x, y) is a pixel grayscale value of an output pixel (x, y), src (x, y) is a pixel grayscale value of an input pixel (x, y), kernel is a convolution kernel, anchor is an anchor point, anchor.x is a horizontal coordinate of the anchor point, and anchor.x is a vertical coordinate of the anchor point.

5. The method according to claim 1, wherein before the performing, by the electronic device, software filtering on the bitmap data, the method further comprises:
determining, by the electronic device, the sub-pixel rendering algorithm based on a model of a display screen.

6. The method according to claim 1, wherein the performing, by the electronic device, software filtering on the bitmap data comprises:
performing, by the electronic device, the software filtering on the bitmap data when it is determined that the electronic device is not in an image shooting sharing scenario or a screen projection scenario.

7. The method according to claim 1, wherein after the performing, by the electronic device, software filtering on the bitmap data of the to-be-displayed content, the method further comprises:
storing, by the electronic device, the bitmap data that is of the to-be-displayed content and that is obtained through the software filtering.

8. The method according to claim 7, wherein the method further comprises:

invoking, by the electronic device, the stored bitmap data that is of the to-be-displayed content and that is obtained through the software filtering; and
performing, by the display screen controller, the sub-pixel rendering on the bitmap data obtained through the software filtering, to determine the RGB grayscale value of each pixel, and driving, based on the RGB grayscale value, the OLED light-emitting point on the OLED display panel to display the to-be-displayed content.

9. The method according to claim 1, wherein the obtaining, by the electronic device, bitmap data of to-be-displayed content comprises:

determining, by the electronic device, a vector map of the to-be-displayed content; and
rasterizing, by the electronic device, the vector map of the to-be-displayed content to obtain the bitmap data of the to-be-displayed content.

10. The method according to claim 1, wherein a data type of the to-be-displayed content comprises a text, a character, and an image.

11. An electronic device, comprising: one or more processors, one or more memories, a display screen, and a display screen controller integrating a sub-pixel rendering algorithm, wherein the one or more memories are separately coupled to the one or more processes, the display screen, and the display screen controller; the one or more memories are configured to store computer program code, and the computer program code comprises computer instructions; and when the computer instructions are run on the processor, the electronic device is enabled to perform the following steps:

obtaining, by using the processor, bitmap data of to-be-displayed content;
performing, by using the processor, software filtering on the bitmap data, wherein the software filtering is determined based on the sub-pixel rendering algorithm and is used to optimize a display edge of the to-be-displayed content on an OLED display panel;

performing, by using the display screen controller, sub-pixel rendering on bitmap data obtained through the software filtering, to determine an RGB grayscale value of each pixel; and

driving, by using the display screen controller based on the RGB grayscale value, an OLED light-emitting point on the OLED display panel to display the to-be-displayed content.

12. The electronic device according to claim 11, wherein the performing, by using the processor, software filtering on the bitmap data comprises:

the bitmap data comprises RGB three-channel bitmap data and single-channel grayscale bitmap data;

when the bitmap data is single-channel grayscale bitmap data, converting, by using the processor, the bitmap data into RGB three-channel bitmap data; and

separately performing, by using the processor, single-pixel channel software filtering processing on a red pixel grayscale value and a blue pixel grayscale value of the RGB three-channel bitmap data; and keeping a green pixel grayscale value of the bitmap data unchanged.

13. The electronic device according to claim 12, wherein the single-pixel channel software filtering processing comprises: a direction of the single-pixel channel software filtering processing is perpendicular to a direction of one-dimensional filtering processing in the sub-pixel rendering algorithm.

14. The electronic device according to claim 13, wherein a formula of the one-dimensional filtering comprises:

$$dst(x,y) = \sum_{\substack{0 \le x' < kernel.cols \\ 0 \le y' < kernel.rows}} kernel(x',y') \times src(x + x' - anchor.x, y + y' - anchor.y),$$

wherein

dst (x, y) is a pixel grayscale value of an output pixel (x, y), src (x, y) is a pixel grayscale value of an input pixel (x, y), kernel is a convolution kernel, anchor is an anchor point, anchor.x is a horizontal coordinate of the anchor point, and anchor.x is a vertical coordinate of the anchor point.

15. The electronic device according to claim 11, wherein before the performing, by using the processor, software filtering on the bitmap data, the method further comprises:
determining, by using the processor, the sub-pixel rendering algorithm based on a model of the display screen.

16. The electronic device according to claim 11, wherein the performing, by using the processor, software filtering on the bitmap data comprises:
performing, by using the processor, the software filtering on the bitmap data when it is determined that the electronic device is not in an image shooting sharing scenario or a screen projection scenario.

17. The electronic device according to claim 11, wherein after the performing, by using the processor, software filtering on the bitmap data of the to-be-displayed content, the electronic device further performs the following step:
storing, by using the memory, the bitmap data that is of the to-be-displayed content and that is obtained through the software filtering.

18. The electronic device according to claim 17, wherein the electronic device further performs the following steps:

invoking, by using the processor, the stored bitmap data that is of the to-be-displayed content and that is obtained through the software filtering; and

performing, by using the display screen controller, the sub-pixel rendering on the bitmap data obtained through the software filtering, to determine the RGB grayscale value of each pixel, and driving, based on the RGB grayscale value, the OLED light-emitting point on the OLED display panel to display the to-be-displayed content.

19. The electronic device according to claim 11, wherein the obtaining, by using the processor, bitmap data of to-be-displayed content comprises:

determining, by using the processor, a vector map of the to-be-displayed content; and
rasterizing, by using the processor, the vector map of the to-be-displayed content to obtain the bitmap data of the to-be-displayed content.

20. The electronic device according to claim 11, wherein a data type of the to-be-displayed content comprises a text, a character, and an image.

21. A computer-readable medium, configured to store one or more programs, wherein the one or more programs are configured to be executed by one or more processors, the one or more programs comprise instructions, and the instructions are used to perform the method according to claims 1 to 10.

Electronic device 100

Antenna 1

Antenna 2

| Mobile communication module<br>2G/3G/4G/5G<br>[150] | Wireless communication module<br>UWB/BT/WLAN/GNSS/NFC/IR/FM<br>[160] |

Speaker [170A]

Receiver [170B]

Microphone [170C]

Headset jack [170D]

Audio module [170]

Display screens 1 to N [194]

Cameras 1 to N [193]

Indicator [192]

Motor [191]

Button [190]

Internal memory [121]

SIM card interfaces 1 to N [195]

External memory interface [120]

USB port [130]

Charging input

Charging management module [140]

Processor 110

Power management module [141]

Battery [142]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 1

FIG. 2b

FIG. 2a

China Mobile 08:08

Documents

W 123.txt

S XX Table.xlsx

W Document 1.txt

W Document 2.txt

China Mobile 08:08

Document 1.txt

HUAWEI

FIG. 3a

Vector map → Rendering → Bitmap → Superimposition → Bitmap → Preview

FIG. 3b

Input: single-pixel white point

Sub-pixel rendering algorithm 1    Sub-pixel rendering algorithm 2

FIG. 4

n–2       n–1       n

Input   | r | g | b |   | r | g | b |   | r | g | b |   m

Sub-pixel rendering algorithm 1

n–2       n–1       n

Output

R G     B G     R G    m

FIG. 5a

Input | r(n–2, m) g(n–2, m) b(n–2, m) | r(n–1, m) g(n–1, m) b(n–1, m) | r(n, m) g(n, m) b(n, m)

Sub-pixel rendering algorithm 1

Output

$$B(n-1, m)=0.5b(n-2, m)+0.5b(n-1, m)$$
$$R(n, m)=0.5r(n-1, m)+0.5r(n, m)$$
$$G(n, m)=g(n, m)$$

FIG. 5b

n-2               n-1               n

| r | g | b |  | r | g | b |  | r | g | b | m-1

Input

| r | g | b |  | r | g | b |  | r | g | b | m

Sub-pixel rendering algorithm 2

n-2             n-1            n

| R — G |  | B — G |  | R — G | m-1

Output

| B — G |  | R — G |  | B — G | m

FIG. 6a

| r(n–2, m–1) g(n–2, m–1) b(n–2, m–1) | r(n–1, m–1) g(n–1, m–1) b(n–1, m–1) | r(n, m–1) g(n, m–1) b(n, m–1) |
|---|---|---|
| r(n–2, m) g(n–2, m) b(n–2, m) | r(n–1, m) g(n–1, m) b(n–1, m) | r(n, m) g(n, m) b(n, m) |

Input

Sub-pixel rendering algorithm 2

Output

$R(n–1, m)=0.25r(n–2, m–1)+0.25r(n–1, m–1)+0.25r(n–2, m)+0.25r(n–1, m)$
$B(n, m)=0.25b(n–1, m–1)+0.25b(n, m–1)+0.25b(n–1, m)+0.25b(n, m)$
$G(n, m)=g(n, m)$

FIG. 6b

Application processor AP

Input an image (three channels)

Display driver integrated circuit DDIC

| Red channel | → | Filtering | → | Filtering result | → | Sampling and driving | → | Red sub-pixel |

| Green channel | → | Driving | → | Green sub-pixel |

| Blue channel | → | Filtering | → | Filtering result | → | Sampling and driving | → | Blue sub-pixel |

Display module

Display screen (OLED)

FIG. 7

One-dimensional
filtering

Green edge

FIG. 8a

Two-dimensional filtering

No green edge

FIG. 8b

EP 4 261 675 A1

Step S101: An electronic device 100 determines a vector map of to-be-displayed content

Step S102: The electronic device 100 renders the vector map of the to-be-displayed content, to generate a bitmap of the to-be-displayed content

Step S103: The electronic device 100 performs software filtering on the bitmap of the to-be-displayed content

Step S104: The electronic device 100 performs hybrid superimposition and layer superimposition on a bitmap that is of the to-be-displayed content and that is obtained through the software filtering

Step S105: The electronic device 100 lights up, based on the superimposed bitmap, a light emitting point on a display screen by using a sub-pixel rendering algorithm, and displays the to-be-displayed content

FIG. 9

FIG. 10a

FIG. 10b

Horizontal
filtering

Eliminate a
green edge in
a vertical
direction

FIG. 10c

Software filtering
(vertical filtering $\begin{pmatrix} 0.5 \\ 0.5 \end{pmatrix}$)

Software filtering
(vertical filtering $\begin{pmatrix} 0.5 \\ 0.5 \end{pmatrix}$)

n

m−2 | R | G | B
m−1 | R | G | B
m | R | G | B

n

m−2 | r | g | b
m−1 | r | g | b
m | r | g | b

r(n, m−2) g(n, m−2) b(n, m−2)
r(n, m−1) g(n, m−1) b(n, m−1)
r(n, m) g(n, m) b(n, m)

$B(n, m-1)=0.5b(n, m-2)+0.5b(n, m-1)$
$R(n, m)=0.5r(n, m-1)+0.5r(n, m)$
$G(n, m)=g(n, m)$

FIG. 11a

FIG. 11b

| r(n, m–2) g(n, m–2) b(n, m–2) |
|---|
| r(n, m–1) g(n, m–1) b(n, m–1) |
| r(n, m) g(n, m) b(n, m) |

Software filtering
(vertical filtering $\left(\begin{smallmatrix}0.5\\0.5\end{smallmatrix}\right)$)

$B(n, m–1)=0.5b(n, m–2)+0.5b(n, m–1)$
$R(n, m)=0.5r(n, m–1)+0.5r(n, m)$
$G(n, m)=g(n, m)$

Sub-pixel rendering algorithm
(horizontal filtering (0.5, 0.5))

$B1(n–1, m)=0.5B(n–2, m)+0.5B(n–1, m)$
$R1(n, m)=0.5R(n–1, m)+0.5R(n, m)$
$G1(n, m)=G(n, m)$

$B1(n–1, m)=0.5[0.5b(n–2, m–1)+0.5b(n–2, m)]+0.5[0.5b(n–1, m–1)+0.5b(n–1, m)]$
$\quad\quad=0.25b(n–2, mv1)+0.25b(n–1, m–1)+0.25b(n–2, m)+0.25b(n–1, m)$
$R1(n, m)=0.5[0.5r(n–1, m–1)+0.5r(n–1, m)]+0.5[0.5r(n, m–1)+0.5r(n, m)]$
$\quad\quad=0.25r(n–1, m–1)+0.25r(n, m–1)+0.25r(n–1, m)+0.25r(n, m)$
$G1(n, m)=G(n, m)$

FIG. 11c

FIG. 12

Input: single-pixel white point

Sub-pixel rendering algorithm 3 → Definition is high A sense of pixelation is serious and a color edge is obvious

Sub-pixel rendering algorithm 4 → Definition is low A color edge is obvious

Sub-pixel rendering algorithm 5 → Definition is low A color edge is obvious

Sub-pixel rendering algorithm 6 → Definition is normal A color edge is normally obvious

FIG. 13

Perform software filtering
on a green channel
[0.125, 0.75, 0.125]

Sub-pixel rendering algorithm 3

Rendering

Superimposition

Preview

Vector map

Bitmap

Bitmap

75%

12.5%

12.5%

Definition is high
No sense of pixelation and color edge

FIG. 14

## INTERNATIONAL SEARCH REPORT

| | International application No. |
|---|---|
| | **PCT/CN2022/073339** |

**A. CLASSIFICATION OF SUBJECT MATTER**

G06F 3/147(2006.01)i; G09G 5/02(2006.01)i

According to International Patent Classification (IPC) or to both national classification and IPC

**B. FIELDS SEARCHED**

Minimum documentation searched (classification system followed by classification symbols)

G06F G09G

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 显示面板, 控制器, 子像素渲染, 位图, s栅格, 滤波, 通道, 边缘, display, controller, OLED, SPR, sub w pixel, rendering, bitmap, filter, channel, RGB, edge

**C. DOCUMENTS CONSIDERED TO BE RELEVANT**

| Category* | Citation of document, with indication, where appropriate, of the relevant passages | Relevant to claim No. |
|---|---|---|
| X | US 2010141670 A1 (MICROSOFT CORP.) 10 June 2010 (2010-06-10) description paragraphs [0026]-[0030], [0052]-[0068] | 1-21 |
| A | CN 109983527 A (SAMSUNG ELECTRONICS CO., LTD.) 05 July 2019 (2019-07-05) entire document | 1-21 |
| A | CN 110337685 A (PACINIAN CORPORATION) 15 October 2019 (2019-10-15) entire document | 1-21 |
| A | CN 109192084 A (HKC CO., LTD. et al.) 11 January 2019 (2019-01-11) entire document | 1-21 |
| A | US 2010045695 A1 (BROWN ELLIOTT, Candice Hellen et al.) 25 February 2010 (2010-02-25) entire document | 1-21 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 April 2022** | **20 April 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/073339**

| Patent document cited in search report | | | Publication date (day/month/year) | Patent family member(s) | | | Publication date (day/month/year) |
|---|---|---|---|---|---|---|---|
| US | 2010141670 | A1 | 10 June 2010 | None | | | |
| CN | 109983527 | A | 05 July 2019 | KR | 20180058037 | A | 31 May 2018 |
| | | | | US | 2018145116 | A1 | 24 May 2018 |
| | | | | WO | 2018097501 | A1 | 31 May 2018 |
| CN | 110337685 | A | 15 October 2019 | US | 2021134221 | A1 | 06 May 2021 |
| | | | | US | 2019122613 | A1 | 25 April 2019 |
| | | | | WO | 2018156999 | A2 | 30 August 2018 |
| | | | | JP | 2020510863 | A | 09 April 2020 |
| | | | | US | 2018240404 | A1 | 23 August 2018 |
| | | | | US | 2018240440 | A1 | 23 August 2018 |
| CN | 109192084 | A | 11 January 2019 | None | | | |
| US | 2010045695 | A1 | 25 February 2010 | WO | 2008131027 | A1 | 30 October 2008 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110144623
- CN 202110143801
- CN 202110742740